# EUROPEAN PATENT SPECIFICATION

(11) **EP 2 771 683 B1**
(45) Date of publication and mention of the grant of the patent: **07.06.2023**
(21) Application number: 12843360.4
(22) Date of filing: 25.04.2012
(51) Int. Cl.: G01N 30/32, B01D 15/16, G01M 3/28, G01N 30/24, G01N 30/88, G01N 30/86

(54) **METHODS FOR LIQUID CHROMATOGRAPHY FLUIDIC MONITORING**
VERFAHREN ZUR FLUIDÜBERWACHUNG IN DER FLÜSSIGKEITSCHROMATOGRAPHIE
PROCÉDÉS DE SURVEILLANCE DU SYSTÈME FLUIDIQUE D'UN APPAREIL DE CHROMATOGRAPHIE EN PHASE LIQUIDE

(30) Priority: 28.10.2011 WO PCT/US2011/058230
(43) Date of publication of application: 03.09.2014
(73) Proprietor: Thermo Finnigan LLC, San Jose, CA 95134 (US)
(72) Inventor: SONG, Tao, Milford, MA 01757 (US); BRANN, John, E., Shrewsbu, MA 01545 (US); TAKAREWSKI, Joseph, John, Brookline, MA 02446 (US); FRANCE, Eric, A., Pawtucket, RI 02861 (US)
(74) Representative: Boult Wade Tennant LLP
(86) International application number: PCT/US2012/034895
(87) International publication number: WO 2013/062624

(56) References cited:
- EP-A2- 0 153 712
- WO-A2-2005/050190
- WO-A2-2005/091924
- US-A1- 2006 062 878
- US-A1- 2011 005 304
- US-A1- 2011 162 447
- US-A1- 2011 174 737
- US-A1- 2011 202 188
- US-A1- 2011 259 451

## Description

### TECHNICAL FIELD

This invention generally relates to chromatography, and more particularly to an automated apparatus and method for monitoring the correctness of the installation and placement of solvents, mobile phases or other reagents within a chromatograph instrument or system.

### BACKGROUND ART

Liquid chromatography (LC) is well-known in the fields of chemical separation, compound purification and chemical analysis. A liquid chromatograph generally includes a separation column that comprises a capillary tube that is packed with a permeable solid material that either is, itself, a chromatographic stationary phase or otherwise comprises or supports a chromatographic stationary phase. A mobile phase, which is a fluid mixture comprising a compound of interest for purification or separation as well as one or more solvents, is caused to flow through the column under pressure from an input end to an output end. Generally, the chemical properties of the stationary phase and the mobile phase solvents are such that the degree of partitioning of the compound of interest between the mobile phase and the stationary phase is different from the degree of partitioning of other compounds within the fluid. As a result, the degree of retention or time of retention of the compound of interest within the column is different from the degree or time of retention of the other compounds, thus causing a physical separation or at least partial purification of the compound of interest from the other compounds.

There are numerous solvents available for liquid chromatography. For instance, the HPLC solvents available under the Fluka^{®} brand name from Sigma-Aldrich Corporation (3050 Spruce Street, St. Louis, MO 63103 USA) include: water, Acetonitrile, Benzene, 1-Butanol, 2-Butoxyethanol, tert-Butyl methyl ether, Carbon tetrachloride, 1-Chlorobutane, Chloroform, 2-Chloropropane, Cyclohexane, Cyclopentane, 1,2-Dichloroethane, Dichloromethane, Diethyl ether, 1,2-Dimethoxyethane, N,N-Dimethylacetamide, Dioxane, Ethanol, Ethanol, Ethyl acetate, Heptane, Hexane, Isooctane, Methanol, Methanol, Methyl acetate, Nitromethane, Pentane, 1-Propanol, 2-Propanol, 2-Propanol, Tetrachloroethylene, Tetrahydrofuran, and Toluene.

Within a chromatograph instrument or system, solvents or other reagents are generally made available to the various columns, pumps, valves and associated interconnecting tubing lines by means of a dedicated rack or compartment. The rack or compartment generally comprises a dedicated storage area for the set of solvents or other reagents that will routinely be needed or that may be needed by the chromatograph instrument or system during the course of several separations. The reagent rack is generally designed to be accessed by an operator or technician at such times that one or more solvents or reagents need to be replaced, having been depleted over the course of operation of the instrument or system.

Successful chromatographic separations depend on specific chemical interactions of the various analytes and other components with a stationary phase and with the various chemical constituents of a mobile phase. Because different analytes have different respective chemical properties, it is important that the correct set of solvents or reagents for an analysis at hand are mixed with a sample containing or potentially containing any particular analyte. Therefore, the various different solvents or reagents are provided in respective dedicated bottles or other containers within a reagent or solvent rack or compartment. The different containers or bottles either have respective assigned locations within the rack or compartment or are associated with different respective assigned draw tubes for aspiration of the solvent or reagent into the system.

Because of the specificity of solvents or other reagents required for any particular chromatographic analysis protocol, it is important that these materials are not confused with one another (or with completely different substances) or misplaced within a reagent or solvent rack or compartment. Although reagents, solvents and other required chemicals are generally supplied by manufacturers in well-labeled containers, these materials may be redistributed into smaller containers within a laboratory environment. The smaller containers may be multi-purpose, initially-unlabeled vessels which require appropriate manual labeling upon initial receipt of material transferred from a manufacturer's original container. The manual label applied in a laboratory may be a non-permanent label. After manual labeling, the small transfer vessel may be handled within the laboratory many times and by many different users, since multiple replenishments from a large-volume manufacturer's "bulk" container may be required as the material within the vessel is routinely consumed. The same vessel may be re-inserted into a solvent or reagent rack many times.

Many opportunities for operator error will occur over the course of the multiple handlings of the transfer vessel or, occasionally, even a manufacturer's original container. For instance, a temporary label may be lost and replaced with an incorrect label. Even if the label is correct, the operator may transfer the wrong material into the transfer vessel. Even if the label and material are correct, the operator may mis-place the vessel within a reagent rack or compartment. Conventional chromatograph systems are designed to expect that particular solvents or reagents will be drawn into particular respective tubing lines. If an incorrect material is supplied, through any one or more of the errors listed above, the chromatograph will continue to perform the pre-programmed steps of an analysis protocol with the wrong material. This may lead to incorrect or poor-quality results, necessitating repetition of many faulty analyses. In a worst-case scenario, the error may never be discovered, and inappropriate actions may be taken based on the incorrect analytical results. Nonetheless, by comparing the properties of a solvent - such as viscosity and compressibility - with the expected values which can be obtained through user input or by means of a sensor mechanism, such as bar code, the solvent identity can be validated. Accordingly, there is a need in the art for an automated chromatograph system that can take automated procedural steps in an attempt to recognize unexpected solvents or reagents before analysis steps are performed unexpected material and that can raise an operator alert if any such errors are detected.

Liquid chromatography systems utilized in clinical laboratories or for purposes of drug discovery may remain in near continuous operation over long periods of time. As a result of wear, repeated handling, repeated pressurization, multiple replacements of samples, etc., occasional or periodic situations or conditions may occur which result in sub-optimal performance of or even instrumental malfunctions in chromatographic systems. For example, as a result of long term repeated pressurization of fluid lines and other fluidic components, leaks may develop which either lead to undesirable loss of fluids from a fluidic system or, perhaps, undesirable ingestion of air into the system. Repeated replacement of sample vials or fluid or solvent containers may lead to contamination of fluid lines by particulates or ingested air. Further, since many components such as pumps and valves undergo repeated mechanical operation, long term wear of such components may occur which, if not addressed, may lead to loss of precision, loss or pressure integrity or even total malfunction of one or more components. Finally, undesirable pressure imbalances may occur within fluidic systems comprising various fluidic sub-systems, each sub-system having its own respective pumps. Accordingly, there are needs in the art for methods for monitoring the performance of chromatographic systems for the purpose of detecting sub-optimal conditions, deterioration of performance, possible future failures, etc. and for warning users of the need to take corrective action or notifying users of estimated remaining useful lifetimes of components. Moreover, there is a need in the art for an automated chromatograph system that can perform such monitoring and provide such warnings or notifications automatically. Preferably, liquid chromatograph (LC) system self-diagnostics and monitoring should include self-diagnoses, validation and troubleshooting of i) the pump and ii) the LC system plumbing for leakage, air bubbles and fluid pathway blocking.

There is also a need in the art for methods for balancing pressures between different fluidic sub-systems. The compressibility of an LC solvent affects the flow rate which in turn affects the chromatographic performance. This effect is an issue for all high-performance (or high-pressure) liquid chromatography (HPLC) systems in general and for those that use syringe pumps in particular. This effect is one of the main drawbacks associated with the syringe type of pump, although such syringe pumps provide other advantages such as smooth gradients and a high degree of robustness. M. Martein, et. al ("The use of syringe-type of pumps in liquid chromatography in order to achieve a constant flow-rate", Journal of Chromatography, 112, 1975) concluded that "[i]t is therefore not surprising that the syringe-type pumps have evolved into very sophisticated and expensive devices" in order to compensate the compressibility issue. Even so "the use of syringe-type pumps is often more difficult and less satisfactory than the use of other types of pumps."

WO-A-2005/050190 discloses a liquid chromatograph having a mobile phase supplying apparatus. Actual flow rates of mobile phases, and back-flow in corresponding liquid-feeding flow paths, are detected and computed.

WO-A-2005/091924 discloses a liquid chromatograph with pressure monitoring and control means. This is employed to monitor a fluid system of the chromatograph for failing components, by employing a testing protocol that selectively employs a part of the liquid chromatograph. Error conditions are monitored by comparing a measured pressure against normal pressures. Fluid flow duration and volume measurements permit chromatograph optimization.

The present disclosure addresses the above-noted needs in the conventional art through the teaching of methods and systems for monitoring properties of fluids provided to liquid chromatography systems and comparing the monitored properties to the values that are expected if correct fluids are provided. Such methods and systems are also capable of monitoring the leak-tight worthiness of pumps and other mechanical or fluid-containing components of the liquid chromatography systems.

The invention provides methods according to claims 1 and 4. Further embodiments are disclosed in the dependent claims.

The present teachings address the issue of the sensitivity of syringe-pump systems to liquid compressibility in at least two ways. First, a general-purpose compressibility compensation algorithm can be applied. The algorithm can compare the compressibility of a solvent in a compressed volume within a specific time with the known compressibility of the expected solvent. Then, an actual flow rate can be obtained to take account of the effect of the compressibility. The expected flow rate can be set as a target for the pump to achieve. This method eliminates the need of the extra flow rate sensors. A controller such as PID (proportional-integral-derivative) can be used to achieve the target flow rate.

Secondly, the various scenarios exhibiting the most serious effects of compressibility are addressed individually. Three different problematic scenarios are investigated: i). a pump undergoing connection to a pressurized fluid pathway, ii) the achievement of flow rate with pressure and iii) situations in which different fluid pathway/subsystems possibly having different pressures are interconnected or disconnected from one another during the operation of a liquid chromatograph. In the first such scenario, the pressurized fluid pathway might flow back to the unpressurized pump to compress the fluid inside the pump, thereby causing a sudden pressure drop and unintended solvent mixing. In the second scenario, the flow rate with pressure takes time to reach the pressure equilibrium and to reach the specified flow rate as a result of the compressibility of the solvent. The time taken to reach the equilibrium is determined by the compressibility of the solvent, the pressure, the flow rate and the solvent. The equilibration time could range from several seconds to more than hours. In the third scenario, the pressure imbalance could cause sudden unintended large fluid flow from a high-pressure subsystem to a low-pressurize sub-system. Even with a one-way fluid component such as check valve to prevent backflow, the low-pressure subsystem needs time to reach pressure equilibrium with the high pressure subsystem. The consequent difference between the actual and expected flow rates as a result of the compressibility is so large as to dramatically affect the performance of the liquid chromatograph.

By addressing each of the above scenarios individually, an optimized simple algorithm can be developed to only solve the problem associated with the particular scenario. This targeted approach can achieve the best performance, in contrast to employing a generalized algorithm. If a generalized method is used for all these scenarios, then the best performance is difficult to achieve and the method could be very complicated.

In accordance with a first aspect of the present teachings, there is disclosed a method for monitoring a fluidic system of a liquid chromatography system, in accordance with claim 1. Another method for monitoring a fluidic system of a liquid chromatography system is disclosed in claim 4.

### BRIEF DESCRIPTION OF DRAWINGS

The above noted and various other aspects of the present invention will become apparent from the following description which is given by way of example only and with reference to the accompanying drawings, not drawn to scale, in which:
FIG. 1 is a schematic illustration of a generalized conventional liquid chromatography - mass (LCMS) spectrometry system;
FIG. 2 is a schematic illustration of an LCMS system in accordance with the present teachings;
FIG. 3 is an illustration of an exemplary rotary valve assembly as may be employed within an apparatus in accordance with the present teachings;
FIG. 4A is a schematic diagram of an exemplary two column LCMS system employing a fluid monitoring portion in accordance with the present teachings;
FIG. 4B is a schematic diagram of a second exemplary two column LCMS system employing a fluid monitoring portion in accordance with the present teachings;
FIG. 5 is a schematic diagram showing an example of valve configurations and fluid flow paths steps that may be employed in a chromatography method employing the system of FIG. 4A;
FIG. 6 is a flow diagram of a method for chromatography fluid monitoring and verification in accordance with the present teachings;
FIG. 7A is a schematic illustration of a sample source portion of an LCMS system according to some embodiments in accordance with the present teachings;
FIG. 7B is a schematic illustration a solvent source portion of still another LCMS system according to some embodiments in accordance with the present teachings;
FIG. 7C is a schematic illustration a solvent source portion of yet another LCMS system according to some embodiments in accordance with the present teachings;
FIG. 8 is a graph showing a set of plots of observed pressure versus time for respective fluids as the fluids are compressed against a plugged port by movement of a syringe pump piston;
FIG. 9A is a schematic graph illustrating, in a general sense, a pressure profile within a syringe pump versus time in a situation in which the syringe pump is used to compress a fluid against a plugged port and subsequently maintain pressure;
FIG. 9B is a graph showing experimental data of the observed pressure leak rate for a syringe pump (with valve) versus the number of cycles of actuation;
FIG 10 is a graph showing two plots of observed pump chamber pressure versus time as a fluid is pumped from a syringe pump into a resistive tubing at a flow rate of 200 µl per minute;
FIGS. 11A-11D are illustrations, respectively, of a normal chromatographic cartridge having two columns, a cartridge for system test purposes having two unobstructed tubes, a second cartridge for system test purposes having one unobstructed tube and one plugged line, and a third cartridge for system test purposes having two plugged lines;
FIG. 12A is a flow diagram of a method for chromatographic system leak monitoring and detection in accordance with the present teachings;
FIG. 12B is a flow diagram of a second method for chromatographic system leak monitoring and detection in accordance with the present teachings;
FIG. 13 is a flow diagram of a method for chromatography pump lifetime monitoring and testing in accordance with the present teachings;
FIG. 14 is a flow diagram of a method for monitoring a liquid chromatography system in accordance with the present teachings;
FIG. 15 is a flow diagram of another method for monitoring a liquid chromatography system in accordance with the present teachings;
FIG. 16A is a flow diagram of a method for balancing pressure in different portions of a liquid chromatography fluidic system in accordance with the present teachings;
FIG. 16B is a flow diagram of a method for compensating pressure differences in different portions of a liquid chromatography fluidic system in accordance with the present teachings; and
FIG. 17 is a flow diagram of a general method in accordance with the present teachings for performing multiple fluidic identification and pump diagnostic functions.

### MODES FOR CARRYING OUT THE INVENTION

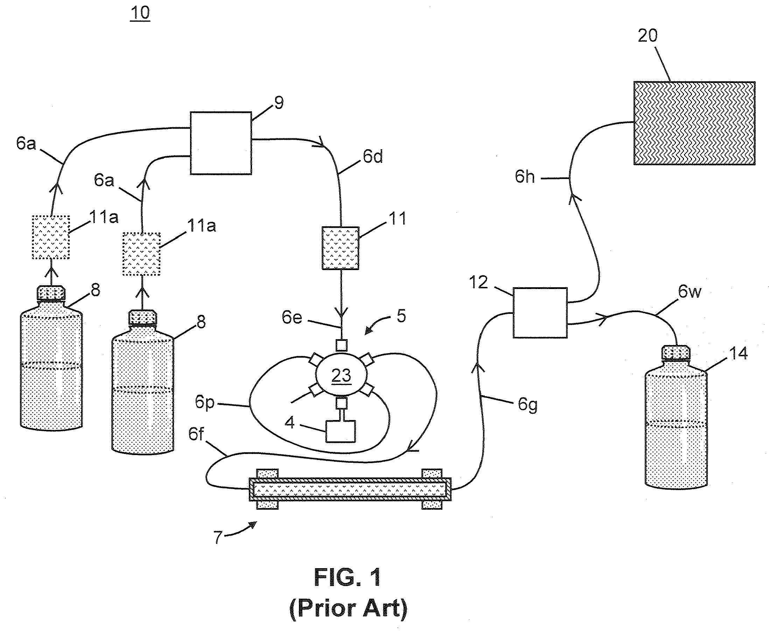

The following description is presented to enable any person skilled in the art to make and use the invention, and is provided in the context of a particular application and its requirements. Various modifications to the described embodiments will be readily apparent to those skilled in the art and the generic principles herein may be applied to other embodiments. Thus, the present invention is not intended to be limited to the embodiments and examples shown. To appreciate the features of the present invention in greater detail, please refer to FIGS. 1-17 in conjunction with the following discussion.

FIG. 1 is a schematic illustration of a conventional liquid chromatography (LC) system. The system **10** shown in FIG. 1 comprises a chromatograph column **7** for separating a liquid chemical mixture into its constituent substances and a detector **20** (such as spectrophotometer or a mass spectrometer) fluidically coupled to the column **7** for detecting or identifying some or all of the separated constituent substances as they are received, in sequence from the column **7.** The column receives a fluid stream comprising one or more selected solvent fluids or reagents supplied from containers **8** as well as a sample of interest from sample source **4.** The various different solvent or reagent fluids, which may comprise a chromatographic mobile phase, are delivered along fluid tubing lines **6a** to valve or fluid selecting or mixing apparatus **9** which may mix the fluids or select a particular fluid. As illustrated, the apparatus **9** is a three-way valve but may comprise a more complex valve or valve system if more than two different solvent fluids are provided. Alternatively, the apparatus **9** could comprise a simple mixing junction or mixing chamber.

The fluids are drawn into the system **10** and propelled to the chromatographic column **7** therein by means of a pump **11** that is fluidically coupled to the output of the valve or fluid selecting apparatus **9** by fluid tubing line **6d.** Alternatively, the single illustrated fluid pump **11** could be replaced separate pumps - one for each solvent or reagent - disposed at positions **11a** in fluid tubing lines **6a.** The fluids output from the pump or pumps are delivered to a sample injector apparatus **5** along fluid tubing line **6e** and are mixed together with a sample provided from the sample source **4.** The sample injector apparatus **5** may comprise, in a well-known fashion, a multiple-port rotary valve **23** and an injection loop **6p** fluidically coupled between two of the ports.

An input of the column **7** of system **10** is fluidically coupled to and receives a mixture of sample and solvent fluids from an output port of the sample injector apparatus **5** by fluid tubing line **6f.** Differential partitioning of the various chemical constituents of the mixture between the mobile phase and a stationary phase packed within the column leads to differential retention of the various constituents within the column and consequent different respective times of elution of the constituents from the column output to fluid tubing line **6g.** An optional valve **12** may separate the eluting substances, either continuously or at various times, into a portion that is delivered to waste container **14** along fluid tubing line **6w** and an analysis portion that is delivered the detector **20** along fluid tubing line **6h.**

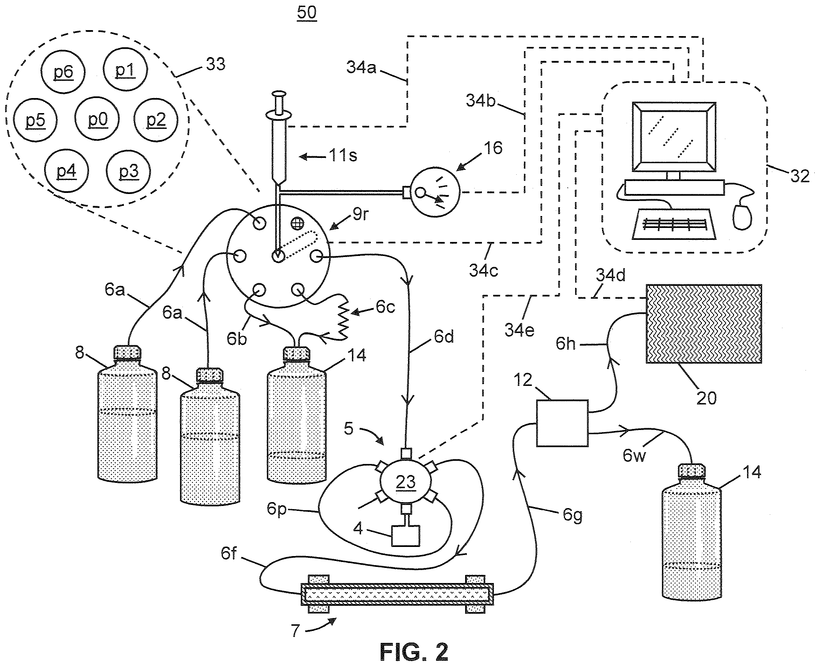

The conventional system **10** shown in FIG. 1 is susceptible to the possible handling errors of a transfer vessel or, occasionally, even a manufacturer's original container, as described *supra* herein. Accordingly, FIG. 2 provides a schematic illustration of an improved LCMS system, system **50,** in accordance with the present teachings. In the system **50,** the solvents or reagents that are drawn from containers **8** into the fluid tubing lines **6a** are delivered to a multiple-port source valve **9r.**

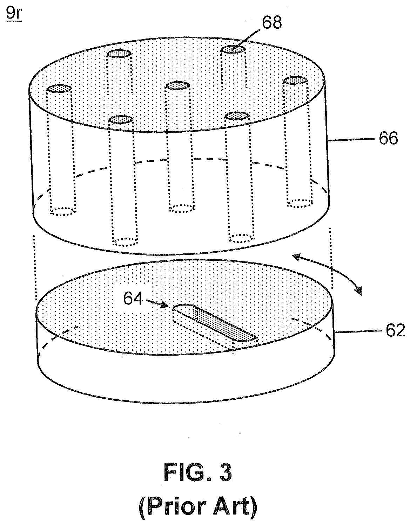

As indicated in the inset **33** of FIG. 2, the source valve **9r** comprises a common port **p0** as well as several dedicated ports - in the illustrated system, six dedicated ports denoted as ports **p1-p6.** The source valve **9r** may comprise a type of a known multiple-port rotary valve, such as the valves known as Rheodyne valves sold by IDEX Health & Science, 619 Oak Street Oak Harbor, WA USA. A more-detailed illustration of an exemplary source valve **9r** is shown in FIG. 3. The source valve **9r** shown in FIG. 3 comprises, in known fashion, a stator portion **66** having a plurality of fluid passages **68** therein passing through the stator portion from one end to another end and a rotor portion **62** having a groove or channel **64** on a side facing the stator portion. As shown, the stator comprises a central fluid passage (corresponding to the port **p0** shown in FIG. 2) as well as six peripheral fluid passages (corresponding to the ports **p1-p6** shown in FIG. 2) radially disposed about the central passage. The rotor portion **62** may rotate, as illustrated by the double-headed arrow in FIG. 3, so that any one of the peripheral passages may be fluidically connected to the central passage, within the source valve **9r,** by means of the groove or channel **64.** Although a rotary valve is shown, the invention is not intended to be limited to such, as the rotary valve is but one example of a valve which may be employed.

Returning to FIG. 2, the solvents or reagents are drawn from their respective containers **8** into and through the source valve **9r** by means of a syringe pump **11s** which is coupled to the central or common port **p0** as well as to a pressure sensor or gauge **16.** Two different solvent or reagent fluids may be fluidically coupled to two respective ports, for example, ports **p5** and **p6,** of the source valve **9r** by means of the fluid tubing lines **6a.** To draw either one of these fluids into the cylinder of the syringe pump, the source valve is configured such that the central port **p0** is fluidically coupled to one of ports **p5** and **p6** while a piston of the syringe pump is withdrawn.

A computer or other electronic logic controller **32** may be included within the system **50** so as to receive information from and transmit control signals to various components of the system. The computer or other electronic logic controller **32** may be electronically coupled to the pump **11s,** the pressure sensor or gauge **16** and the source valve **9r** by means of electronic communication lines **34a, 34b** and **34c,** respectively. The computer or other electronic logic controller **32** may also be electronically coupled to other components of the system **50,** although such couplings are not explicitly illustrated in FIG. 2.

One port, for example, port **p1** of the source valve is blocked or plugged so that fluid cannot exit through this port and may be a default position of the source valve when the pump is not in use. If the source valve is configured to dispense solvent to port **p1** and force is applied to the syringe pump piston, the pressure measured by sensor or gauge **16** is expected to rise rapidly. In the absence of a leak, the rate of pressure rise depends on fluid compressibility. The rate of pressure rise may be used to verify the correctness of a particular solvent or reagent, from among a limited number of choices. The use of the plug position **p1** as a source valve "output" can also be used to verify pump seal performance and pump priming. Using a calibration fluid of known compressibility, a failure of the pressure to increase as expected or an unexpected pressure decrease can indicate an apparatus defect.

Another port, for instance, port **p2** of the source valve **9r** is the output to the sample injector apparatus **5** via fluid tubing line **6d.** Another port, for instance, port **p3** is used to output a small portion of a previously aspirated solvent into a waste container through a calibrated length of resistive tubing **6c.** The tubing **6c** may comprise a restricted-diameter inner bore which provides a known resistance to fluid flow. If the source valve is configured to dispense solvent to port **p3** and force is applied to the syringe pump piston, the solvent will be dispensed to the waste container **14** concurrent with a rise in pressure, as measured by sensor or gauge **16,** that corresponds to solvent viscosity. This measured pressure rise may be used to verify solvent identity, from among a limited number of choices. The relation between pressure rise and viscosity may be calibrated by dispensing a calibration fluid having known viscosity through port **p3.** Finally, another port, such as port **p4,** is an output to the waste container **14,** using least resistance (e.g. regular) fluid tubing line **6b,** which is used for pump prime and purge operations.

With regards to the system **50** shown in FIG. 2, it is to be kept in mind that the system may be expanded by including additional instances of the sub-set of components comprising: the one or more solvent or reagent containers **8,** the source valve **9r** having a plugged port, the pump **11s**, the pressure sensor or gauge **16,** the known-resistance tubing **6c,** the waste container **14** and the other connecting fluid tubing lines **6a, 6b** and **6d.** This sub-set of components may be considered to comprise a fluid-providing sub-system of the liquid chromatograph system **50.** Alternatively or in addition, different respective solvents may be provided in different respective instances of said fluid-providing sub-system, especially if a large number of solvents or reagents are provided within the system.

Many liquid chromatography systems employ more than one chromatographic column during fractionation, separation or purification of an analyte. For instance a first column may comprise a sample "cleanup" column and a second column may comprise an analytical column. The cleanup column, according to some embodiments, may be a size exclusion or affinity liquid chromatography column or a High-Turbulence Liquid Chromatography column used for matrix interference removal. For instance, a test sample may applied to a first column (e.g., a clean-up column such as a Cyclone P column or the like) at the inlet port, eluted with a solvent or solvent mixture onto a second column (e.g., an analytical column such as a Hypersil Gold PFP or the like), and eluted with a solvent or solvent mixture from the second column to the outlet port. Different solvent modes may be selected for eluting the analytes. For example, liquid chromatography may be performed using a gradient mode, an isocratic mode, or a polytyptic (i.e. mixed) mode.

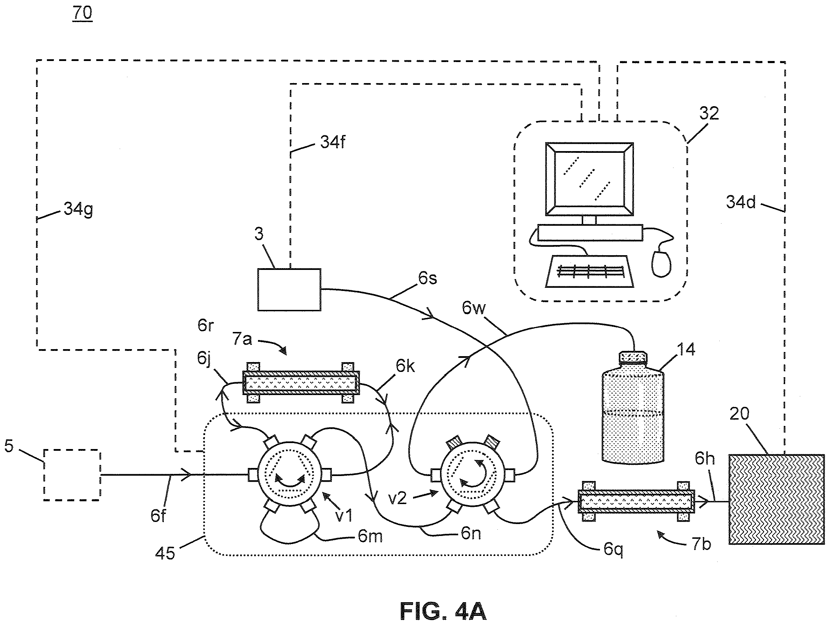

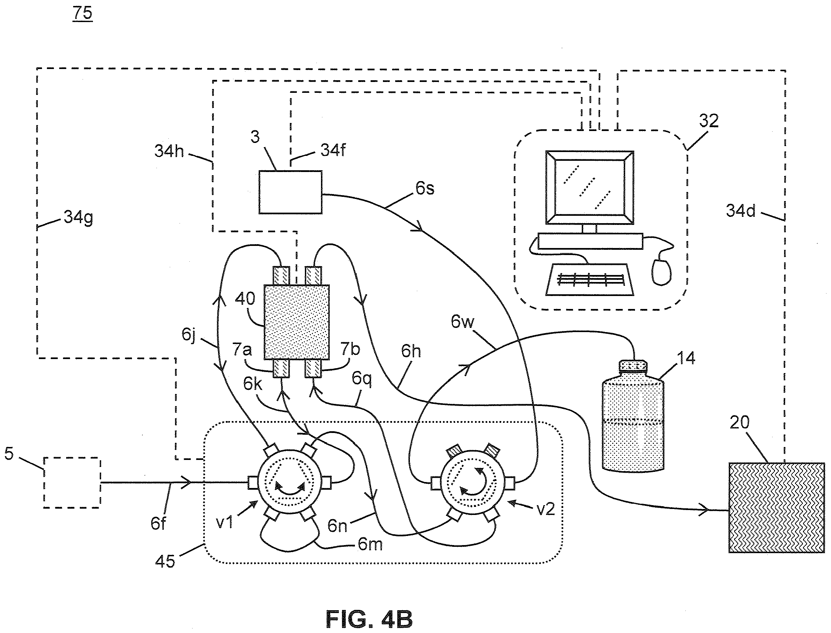

FIGS. 4A and 4B are schematic diagrams of two exemplary two-column LCMS systems employing a fluid monitoring portion in accordance with the present teachings. Sample injector **5** and fluid tubing line **6f** are reproduced from FIG. 2. For clarity of presentation, components upstream of the sample injector (including the solvent or reagent containers **8,** the source valve **9r,** the pump **11s,** the pressure sensor or gauge **16,** the known-resistance tubing **6c,** the waste container **14,** the connecting fluid tubing lines **6a, 6b** and **6d** and the electronic communication lines **34a, 34b** and **34c**) are not shown but are considered to be present in the systems shown in FIGS. 4A-4B. Alternatively, the sample injector **5** shown in FIGS. 4A-4B may be replaced by a more-complex sample source sub-system - possibly comprising multiple sample injectors, pumps, valves, mixing tee joints, solvent or reagent containers, and tubing lines. In both the system **70** (FIG. 4A) and the system **75** (FIG. 4B), two chromatograph columns - a first column **7a** and a second column **7b** - are utilized. The first column **7a** may advantageously comprise a cleanup column that may be employed to separate certain classes or sub-sets of compounds from one another (e.g. large molecule versus small molecule, or polar versus non polar) with the fraction that may contain possible analyte substances retained and the other fraction discarded (or vice versa). The second column, column **7b,** is an analytical column that may be similar to the single column **7** of the system **50** (FIG. 2). The retained fraction eluted from the first, cleanup column **7a** may be separated into particular isolated compounds by the second column **7b.** The eluted constituents may be provided to detector **20** along fluid tubing line **6h.**

As an example of a two-stage chromatographic separation, a TurboFlow^{®} column (also known as a High Turbulance Liquid Chromatography or HTLC column) may be employed as the cleanup column **7a** in a first separation step in order to isolate and possibly concentrate a subset of compounds based on their size range or molecular weight range (or some other property). TurboFlow^{®} methods and apparatus are described in detail in U.S. Patents 5,772,874; 5,919,368 and 6,149,816. Briefly stated, the TurboFlow^{®} apparatus and methods include or relate to a chromatography column or body that is formed as a substantially uniformly distributed multiplicity of rigid, solid, porous particles having substantially uniform mean cross-section dimensions or diameters of not less than about 30 µm, typically 50 µm or greater up to, but not limited to, 1000 µm in certain instances. The particles are selected from a range of various sizes and shapes and are held together in a body or column as by pressure, sintering and the like so that interstitial channels having a total interstitial volume of not less than about 45% of the total volume of the column are formed between the particles. The surfaces of the particles, including the inner surfaces of the pores in the particles, are chromatographically active, as by being coated with chromatographic stationary phase layers.

Because of the nature of the particles and packing in a TurboFlow^{®} column, the flow of the fluid mixture through the column can be at a high flow rate and is believed that, under such conditions, turbulent flow of the mixture is induced within at least a major portion of the interstitial volume, and it is postulated that such turbulent flow in fact enhances the rate of mass transfer, thus increasing the dynamic capacity of the column. From the principles of turbulence, diffusion, and chemistry, small sample molecules may be separated from a sample matrix in a TurboFlow^{®} column. Since small molecular weight molecules diffuse faster than large molecular weight molecules, the small sample compounds diffuse into the particle pores. The turbulent flow of the mobile phase quickly flushes the large sample compounds through the column to waste before they have an opportunity to diffuse into the particle pores. Of the sample molecules that enter the pores, those that have an affinity to the chemistry inside the pores bind to the internal surface of the column particles. The small sample molecules that have a lower binding affinity quickly diffuse out of the pores and are flushed to waste. A change in mobile phase, temperature or other parameter may then cause those molecules that were bound by the TurboFlow^{®} column to elute to the analytical column for further separation.

The flow of analyte bearing or other fluids - including samples, solvents and mixtures thereof possibly together with other chemical components - through the two chromatograph columns **7a, 7b** of either the system **70** or the system **75** is controlled by two multi-port valves **v1, v2,** illustrated as valve system **45.** Each valve may be a rotary valve of a known type, such as Rheodyne valves in which a rotor portion comprises two or three channels that may fluidically interconnect various pairs of adjacent ports, depending on the orientation of the rotor portion. The rotation and channels are schematically indicated, respectively, by a double-headed arrow and by a set of dotted straight lines in each of the valves **v1** and **v2.** The first valve **v1** may be configured to as to fluidically interconnect the members of three different pairs of adjacent ports; the second valve may be configured so as to fluidically interconnect a first pair of adjacent ports as well as all the ports of a triplet of ports, as shown by the dotted line.

One port of the first valve **v1** receives a fluid from fluid tubing line **6f.** Fluid tubing lines **6j** and **6k** fluidically connect the ports of the first column **7a** to respective ports of the first valve; fluid tubing line **6n** fluidically connects a port of the first valve **v1** to a port of the second valve **v2** and another fluid tubing line **6m** fluidically interconnects two ports of the first valve. The first valve **v1** and associated fluid tubing lines may be configured (as shown) such that fluid may be caused to flow through the first column **7a** in either direction.

In either the system **70** or the system **75,** a port of the second valve receives a fluid, possibly comprising various solvents or other chemical constituents or mixtures thereof, from a solvent source **3** via fluid tubing line **6s**. The solvent source **3** may comprise a sub-system including various reagent containers as well as one or more syringe pumps, rotary source valves, pressure sensors, resistive fluid tubing lines, mixing tee joints, waste containers and other interconnecting fluid tubing lines similar to corresponding features illustrated in FIG. 2. Thus, the solvent source **3** may include a second parallel instance of a fluid-providing sub-system as described with reference to the system **50** or may comprise a more-complex fluid-providing sub-system. One or more electronic communication lines **34f** may electronically couple various of the components of the solvent source **3** to the computer or other electronic logic controller **32** in similar fashion as shown in FIG. 2.

Two ports of the second valve **v2** may be plugged or otherwise unused, as indicated by hatch marks in FIGS. 4A, 4B. Another port of valve **v2** directs non-analyzed fluids to a waste container **14** along fluid tubing line **6w.** A final port of the valve **v2** is fluidically coupled to an inlet port of the second chromatograph column **7b** via fluid tubing line **6q.** One or more electronic communication lines **34g** may couple the computer or other electronic logic controller **32** to the valves **v1, v2** so as to control their operation.

The system **75** illustrated in FIG. 4B is similar to the system **70** illustrated in FIG. 4A with the exception that the two chromatograph columns **7a, 7b** are housed together in a cartridge or housing **40.** An example of a two-column cartridge that may be employed as the cartridge **40** is disclosed in a co-pending International (PCT) Application filed on October 28, 2011 titled "Modular Multiple-Column Chromatography Cartridge" (Attorney Docket No. 5854WO1/PCT; International Application No. PCT/US11/58229) and assigned to the assignee of the present invention. The cartridge **40** may include, in addition to a housing, a computer-readable identification (an indicator or identifier), such as a barcode or an RFID tag and may also include on-board computer readable memory, such as flash memory or any other form of electronic memory device, as well as an on-board electronic processor. The on-board memory, if present, may be used to store data relating to the use of the columns of the cartridge, such as supported chromatographic methods or column usage history. Further, the cartridge **40** may include one or more heaters to maintain one or the other of the columns at a temperature corresponding to an analysis protocol, as well as one or more sensors of temperature or some other physical quantity. Accordingly, the cartridge may be electronically coupled to the computer or other electronic logic controller **32** by an electronic communication line **34h** so as to, for instance, transfer identification or other data to or from a memory unit of the cartridge, to control heaters or to monitor the sensors.

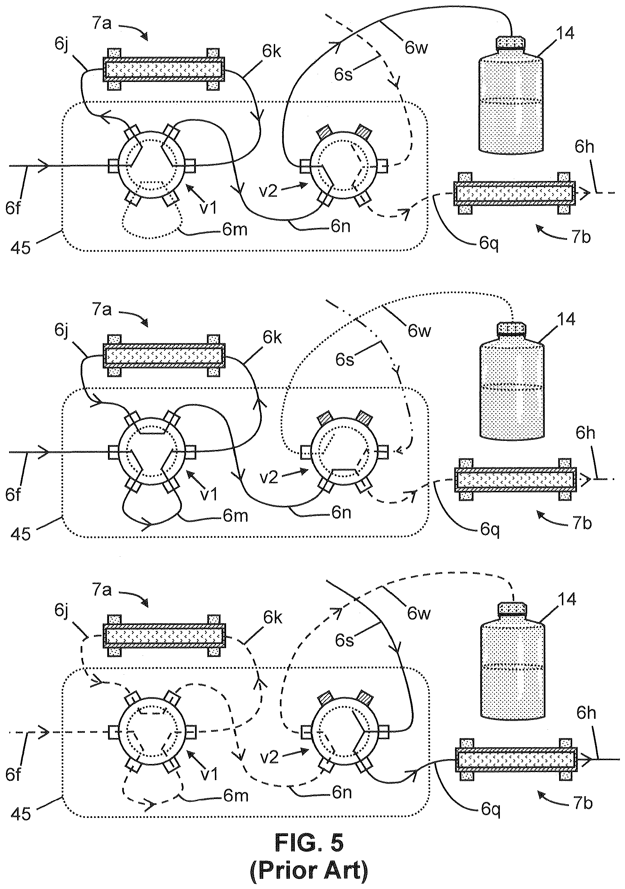

FIG. 5 is a schematic diagram showing an example of valve configurations of the valve system **45** and fluid flow paths steps that may be employed in a chromatography method employing the system of FIG. 4A. The top, middle and bottom diagrams of FIG. 5 respectively illustrate: a sample loading step in which an analyte-bearing fluid is delivered to the first column **7a;** a transfer step in which the at least partially purified analyte is mixed with a solvent in valve **v2** and transferred to the second column **7b;** and an eluting step, in which the analyte is eluted from the second column **7b** and transferred to the detector (not shown in FIG. 5). In these diagrams, different flow paths are distinguished from one another by lines of different appearance (i.e., solid, dotted, dashed and dash-dot lines). Other modes of operation, utilizing alternative sets of valve configurations or sequences, are also possible.

### Example 1 - Fluid Monitoring and Verification

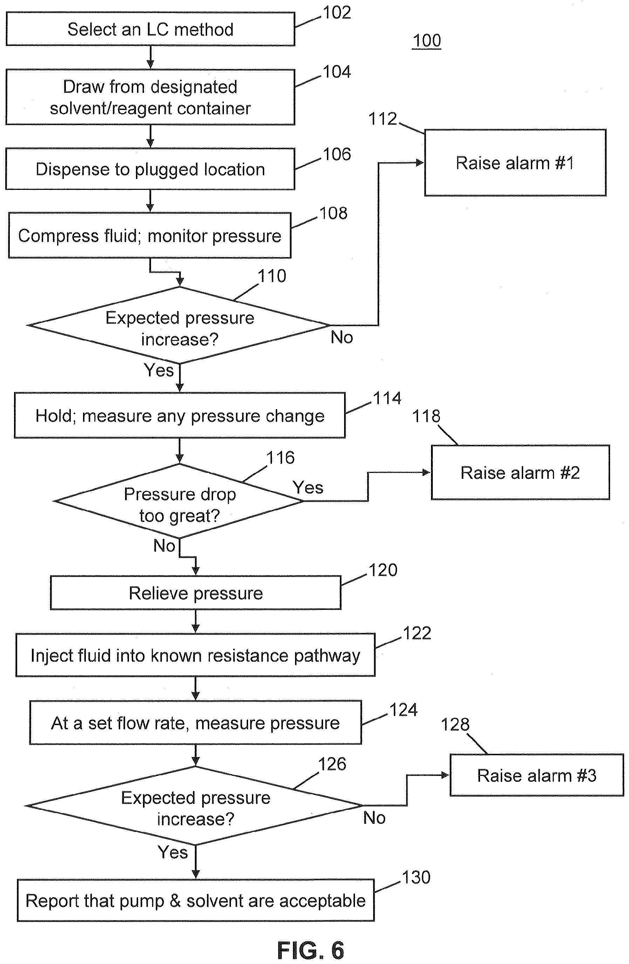

In accordance with the discussion presented above, FIG. 6 provides a flow diagram of a method **100** for chromatography fluid monitoring and verification in accordance with the present teachings. The method **100** may be executed by software or firmware of the computer or other electronic logic controller **32** in conjunction with signals transmitted along the electronic communication lines **34a, 34b** and **34c.** In the first step, Step **102** of the method **100,** a user selects an LC method which includes solvents or reagents for which compressibility and viscosity information is available. In the next step, Step **104,** a valve, such as the source valve **9r,** is selected such that a pump (for instance, the syringe pump **11s**) draws a fluid from a designated solvent or reagent bottle. In Step **106,** the valve is configured so as to fluidically couple the pump cylinder, filled with the fluid drawn in step **104,** to a plugged location, such as location **p1** of the source valve **9r.** In Step **108,** the pump is operated so as to compress the fluid therein, while monitoring pump pressure, such as with sensor or gauge **16.** Then, in the decision step, Step **110,** if the observed rate of pressure increase (from Step **108**) does not substantially match an expected value for an expected fluid, then the method execution is caused to branch to an execution termination or interruption step, Step **112,** in which an alarm is raised that the solvent in the location from which the fluid was drawn may not match expectations. Upon observing the alarm, a user may perform any appropriate tests or checks to determine if the correct solvent or reagent is loaded in the position from which fluid was drawn. Depending upon the results of such tests or checks, the user may replace the solvent or reagent and re-start execution of the method **100** or, alternatively, may re-set the alarm (possibly, after solvent or reagent replacement) and continue execution of the method from the interrupted point.

If, during execution of step **108** of the method **100** (FIG. 6), the observed rate of pressure increase does indeed substantially match an expected value for an expected fluid, then step **110** branches execution to Step **114** in which, after obtaining a maximum useable pressure, the pump piston is held in place for a set amount of time while continuing to measuring any change or changes in pressure. In the subsequent decision step, Step **116,** if an observed pressure drop is greater than an acceptable amount during the selected time, then execution is caused to branch to an execution termination or interruption step, Step **118,** in which an alarm is raised that the pump in the given location may not be leak-free in accordance with expectations. Upon observing the alarm, a user may perform any appropriate tests or checks to determine if the pump is operating correctly. Depending upon the results of such tests or checks, the user may need to replace or repair the pump or other components and re-start execution of the method **100** or, alternatively, may re-set the alarm and continue execution of the method from the interrupted point.

The method **100** (FIG. 6) branches to Step **120** if, in Step **116,** the observed pressure drop is determined to not exceed the acceptable amount during the selected time. In step **120,** the pump may be operated, such as by moving a pump piston, so as to relieve the pressure in pump chamber. In the subsequent Step **122,** the valve, such as source valve **9r,** is operated so as to fluidically connect the pump with a fluid pathway having a known fluid resistance; in Step **124,** the pump is operated so as to inject the fluid into such pathway at a set flow rate while the pump pressure is measured. In the subsequent decision step, Step **126,** if the observed pressure increase (of Step **124**) does not match an expected value, then execution is caused to branch to a termination or interruption step, Step **128,** in which an alarm is raised that that the solvent in the location from which the fluid was drawn may not match expectations. Upon observing the alarm, a user may perform any appropriate tests or checks to determine if the correct solvent or reagent is loaded in the position from which fluid was drawn. Depending upon the results of such tests or checks, the user may replace the solvent or reagent and re-start execution of the method **100** or, alternatively, may re-set the alarm (possibly, after solvent or reagent replacement) and continue execution of the method from the interrupted point.

Execution of the method **100** proceeds to Step **130** if all pressure monitoring tests have yielded acceptable results. At this point, it may be reported to a user that the pump and solvent check passed with acceptable measurements. Subsequently, the valve may be configured so as to dispense the solvent or reagent into the system along fluid tubing line **6f** (if the solvent is to be utilized) or to waste.

### Alternative Hardware Configurations

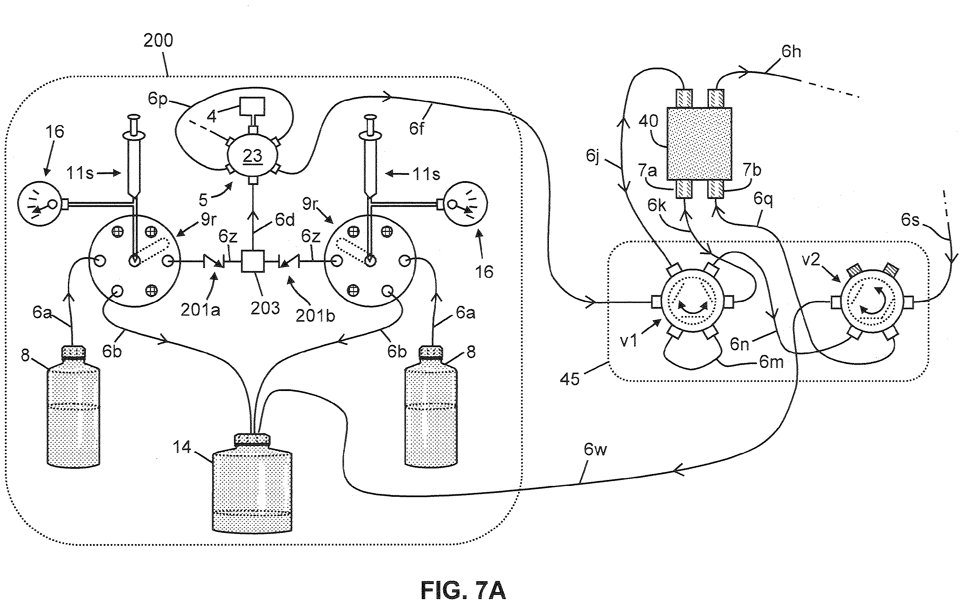

FIG. 7A is a schematic illustration of a sample source sub-system of an LCMS system according to some embodiments in accordance with the present teachings. The sub-system **200** shown in FIG. 7A may be employed as a loading system for loading analytes onto a chromatographic column. The sub-system **200** comprises a sample injector apparatus **5** and may comprise two or more syringe pumps **11s,** respective associated pressure sensors or gauges **16,** respective associated selection valves **9r,** and respective solvent sources **8.** Such components may be essentially similar to similarly-labeled components in FIG. 2. A dedicated waste container **14** may be included as part of the sample-source sub-system **200** or, alternatively, a single waste container or drain manifold may be employed for a chromatography system of which the sub-system **200** is a part.

Corresponding fluid tubing lines **6z** leading from the selection valves are joined by a fluid coupling **203** which, depending on system application or configuration, may comprise a mixing tee or a selection valve. If more than two selection valves **9r** are employed, then the coupling **203** may comprise a multiport valve or a cross coupling. The coupling **203** may be configured so as to selectively fluidically couple line **6d** to either one one of the pumps or to fluidically couple line **6d** to both pumps simultaneously. Alternatively, the coupling **203** may be configured as a three-way tee valve which could accomplish either selective coupling (to one pump or the other) or simultaneous coupling (to both pumps). One-way check valves **201a, 201b** may be installed in one or more of the fluid tubing lines **6z** so as to prevent fluid originating from a pump or valve in which the fluid is held at a high pressure from flowing back into a coupled second pump or valve in which a fluid is maintained at a lower pressure. If it is known that one pump will always be operating at a higher pressure than other pumps, then a check-valve may not be required on an output line associated with that pump.

The sample-source sub-system **200** shown in FIG. 7A may be used in place of the injector **5** shown in FIGS. 4A-4B. Accordingly, the sample-source sub-system **200** is illustrated, in FIG. 7A, as being fluidically coupled to the valve system **45** and associated two-column chromatographic cartridge **40** previously discussed in relation to FIG. 4B. Accordingly, an output fluid tubing line **6f** delivers a mixture of sample plus solvents to a port of valve **v1** of the valve system **45.** As previously discussed, an output fluid tubing line **6h** from the chromatographic cartridge **40** delivers separated chemical components to a mass spectrometer (not shown).

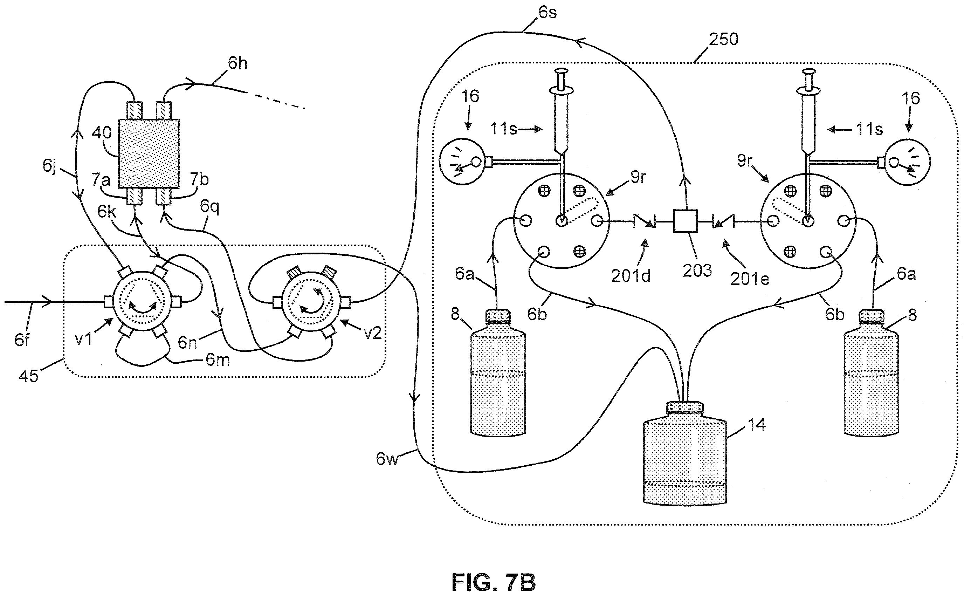

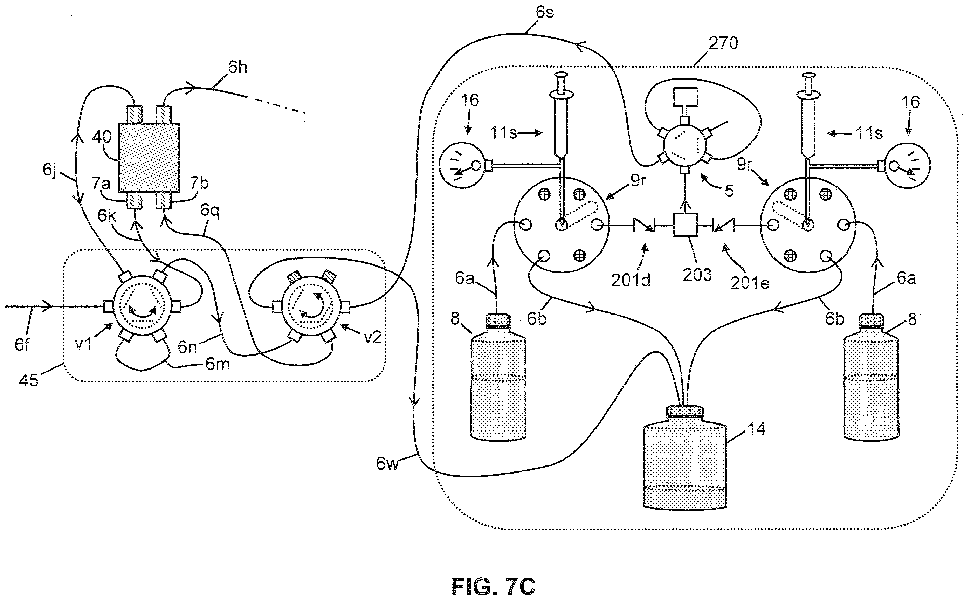

FIGS. 7B-7C are schematic illustrations of example solvent source sub-systems of an LCMS system according to some embodiments. The sub-system **250** illustrated in FIG. 7B may be employed as an eluting system for separating analytes previously loaded onto a chromatographic column. As shown, the solvent source sub-system **250** comprises many of the same components already described in relation to FIG. 7A. However, the sub-system **250** does not include an injector. Instead, solvents that are either mixed or selected at the fluid coupling **203** are directed, along fluid tubing line **6s,** to a port of the valve **v2** of the valve system **45.** The sub-system **250** illustrated in FIG. 7C is similar to the sub-system **250** of FIG. 7C except that the sub-system **270** includes a second sample injector apparatus **5** installed along the fluid tubing line **6s.** The provision of the second sample injector apparatus gives users the ability to inject sample on the second injector and thereby bypass the chromatographic column **7a** within the cartridge **40.** At those times when the second sample injector apparatus is not used, the valve portion of the second injector apparatus may be configured to route fluid received from the coupling **203** directly to valve **v2.** One-way check valves **201d, 201e** may be installed in one or more of the fluid tubing lines leading from output ports of the pumps **9r** so as to prevent fluid originating from a pump or valve in which the fluid is held at a high pressure from flowing back into a coupled second pump or valve in which a fluid is maintained at a lower pressure. If it is known that one pump will always be operating at a higher pressure than other pumps, then a check-valve may not be required on an output line associated with that pump.

### Example 2 - Observed Pressure Increase versus Compressibility

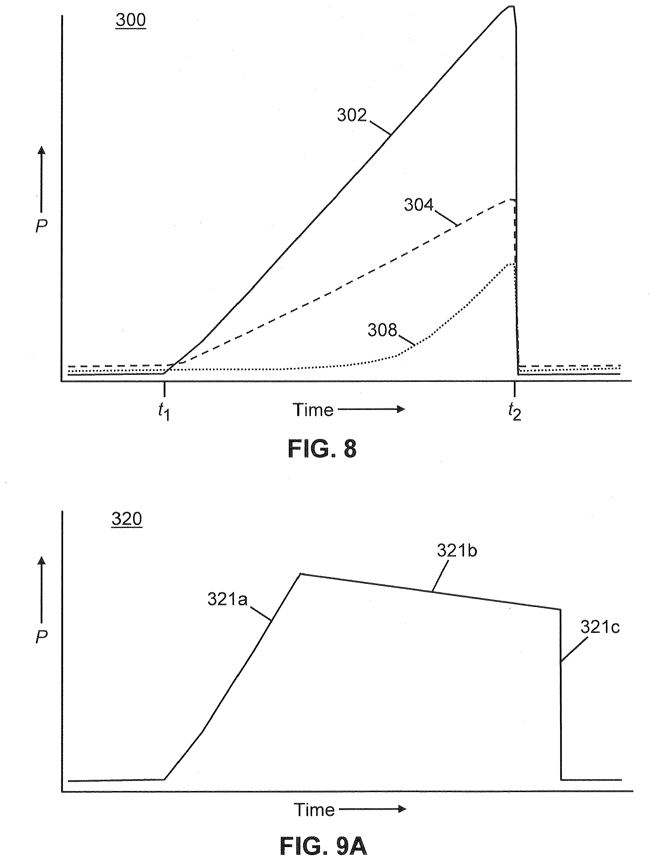

In order to determine, during routine chromatograph operation, if a measured pressure increase corresponds to a compressibility of an expected fluid (e.g., Step **110** of Method **100** outlined in FIG. 6), it is desirable to first generate pressure calibration data. FIG. 8 provides a graph **300** showing examples such data. The top two curves illustrated in FIG. 8 - curve **302** and curve **304** - are plots of pressure versus time for as observed for bubble-free water and methanol, respectively, as each fluid is compressed against a plugged port by movement of a syringe pump piston at a constant rate. In each case, compression is started at time *t*₁ and pressure is released at time *t*₂. As expected, the rate of pressure increase in such experiments is inversely related to the compressibility of each single-phase fluid within the syringe pump. However, if air or gas bubbles are present within a liquid, then the rising-pressure portion of the curve will be delayed, as is indicated by curve **308,** which represents the same experiment performed on a two-phase fluid consisting of water and gas bubbles. If bubbles are present, the initial motion of the pump piston serves to collapse gas bubbles and, perhaps, cause dissolution of the gas into the liquid without substantial pressure increase. Such results can thus be utilized to monitor for and detect the presence of unwanted air or gas bubbles during routine operation.

### Example 3 - Monitoring Pump Pressure Integrity and Lifetime

Fluid compression experiments may also be employed to determine the pressure integrity of seals with a syringe pump as well as to develop predictive models that can alert a user that a pump is approaching failure. FIG. 9A schematically illustrates the general form of data obtained in such experiments. The curve in graph **320** represents the observed pump pressure during corresponding to two experimental segments. During the first such segment, a fluid is compressed by operation of a syringe pump while an output valve is directed to a plugged port. During this experimental segment, the observed pressure rises along curve segment **321a** as a result of the finite compressibility of the fluid. During the second experimental segment the syringe pump is held motionless while the pressure drift - represented by curve segment **321b,** is observed. During this time period, a slow decrease in internal pump pressure is observed - even with a new pump - because the pump and valve pressure seals are necessarily imperfect. Curve segment **321c** represents release of pressure at the end of an experiment.

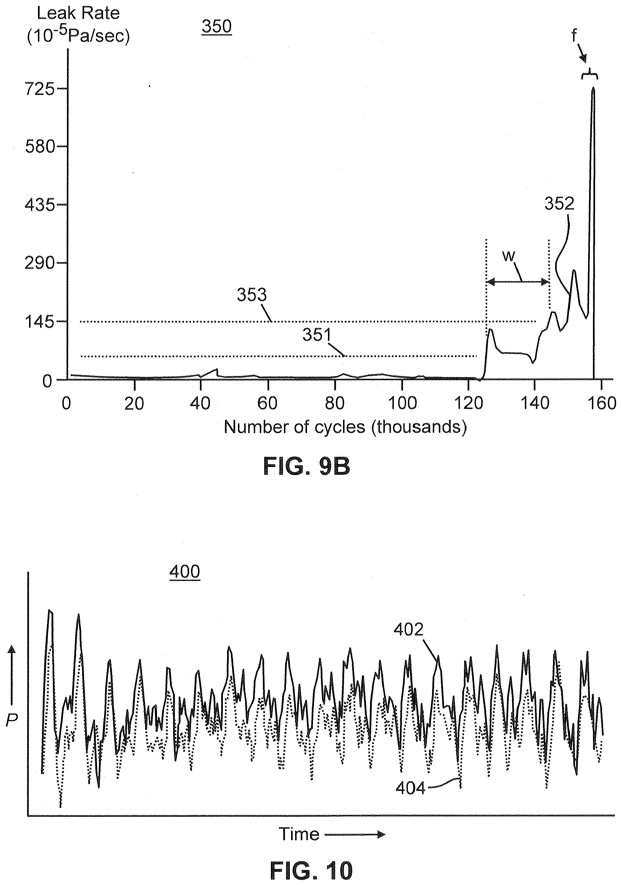

The slope of the curve segment **321b** shown in FIG. 9A is diagnostic. If a syringe pump is repeatedly operated over many such compression and decompression cycles, the pressure-sealing ability of the pump will be observed to deteriorate over time. Stated differently, the leak rate, expressed as the rate of pressure change, will be observed to increase over time. If experiments such as those described in relation to FIG. 9A are periodically performed during the course of compression cycling, then the variation in leak rate versus pump lifetime may be modeled. If such experiments are then also periodically performed - either automatically or under the control of a user - during the course of routine pump operation, then the observed leak rate behavior may be compared with the model in order to predict remaining pump lifetime. Since the exact rate of pressure decay (i.e., the leak rate) may vary both with fluid type and with pump operating pressure, such leak rate experiments should be performed under standardized conditions. The pressure leak rate is observed to follow a curve such as the curve **352** shown in graph **350** of FIG. 9B.

As indicated by the data plotted in FIG. 9B, the pressure leak rate of a syringe pump does not vary from its initial value, over an initial period encompassing most of the pump's usable lifetime, by more than a certain value. It is further observed that, at some time prior to total failure of the pump, the pressure-sealing ability of the pump will enter into a pre-failure condition, at the onset of which the leak rate rapidly increases to greater than twice the maximum leak rate observed during the initial period. The onset of the pre-failure condition is thus indicated by the leak rate initially exceeding the normal working threshold line **351** as indicated in FIG. 9B.

During routine operation, a chromatograph instrument can periodically or occasionally be operated so as to measure pressure decay according to a procedure such as that discussed in reference to FIG. 9A. The pressure decay measurements could be programmed to occur automatically at regular periods. With such data, it is possible to predict how many injection cycles may remain in a pump's useable lifetime according to model data (e.g., curve **352**) previously determined. Once the pressure leak rate has been observed to exceed such a threshold, a warning may be issued to users that the pump is approaching the end of its useable lifetime and should soon be repaired or replaced. Such a warning or alert may be communicated during warning period was indicated on FIG. 9B. Once the leak rate has exceeded a second threshold, indicated as warning threshold line **353** in FIG. 9B, the operation of the pump may no longer meet specifications and the pump will soon undergo complete failure at region **f**.

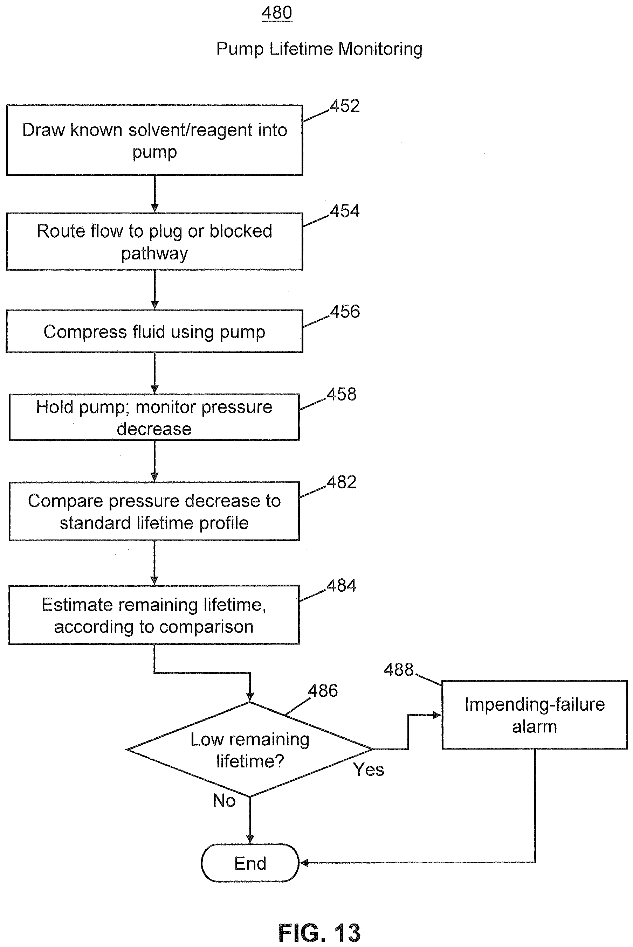

FIG. 13 is a flow diagram of a method for chromatography pump lifetime monitoring and testing that illustrates the above concepts. In the first step, step **452,** of the method **470** (FIG. 13), a known solvent or reagent is drawn into a syringe pump. In general, a syringe pump comprises a mechanically-driven piston which is fluidically sealed against and moves within a hollow cylinder so as to either draw fluid into a portion of the cylinder or to expel at least a portion of the fluid from the cylinder. If the output of the pump is blocked or if there is a blockage in a fluidic system to which the pump output is routed, then small movement of the piston will cause a compression of the fluid and a rapid pressure increase. Subsequent holding or maintaining of the syringe pump piston in a fixed position should correspond to no pressure change, if the pressure seals of the pump are perfect. In practice, a small rate of pressure decrease is normal and expected, since the seal is not perfect. With continued pump operation, however, wear in the seals and various mechanical components may lead to increasing rates or pressure loss when the syringe pump piston is maintained in a fixed position. Additionally, if leaks are present, the rate of pressure increase may be less than expected upon movement of the piston so as to compress the fluid, provided that the compressibility of the fluid in the pump cylinder is known.

Thus, in step **454** of the method **470** (FIG. 13), the fluid flow is routed to a blocked pathway. This step may be accomplished, for instance, by configuring a valve near the pump output - such as multiple-port rotary selection valve **9r** illustrated in FIGS. 3, so as to route the pump output to a plugged port, such as, for instance port **p1** shown in FIG. 2. Accordingly, the valve is used so as to fluidically couple the pump to a plugged port. In the next step, Step **456,** the pump piston is caused to move at a pre-determined rate in a direction which compresses the fluid between the piston and the plug. In Step **458,** the compression is stopped and the pump piston is maintained or held in a fixed position while the pressure decrease, preferably of the fluid within the pump, is monitored. In the next step, Step **482,** the rate of decrease is compared to a standard profile, such as profile **352** shown in FIG. 9B, that indicates the expected behavior of the pressure sealing capability of a pump throughout its lifetime. The profile **352** may be pre-determined, for instance, from prior experience with one or more pumps of the same type as the one being tested. In Step **484,** an estimated remaining useful lifetime of the pump is determined, based on the comparison made in Step **482.** If the estimated remaining lifetime (either in terms of time or operational cycles) is less than a certain threshold (Step **486**), then a notification is provided or an alarm is raised (Step **488**), as appropriate.

### Example 4 - Monitoring Pump Precision

In general, the mechanical movement of a piston of a syringe pump is controlled by a lead screw that is mechanically coupled to the piston. Accordingly, the precision of the pump, as determined by the precision of the fluid flow rate produced by action of the pump, depends upon the precision of the thread pitch of the lead screw and the thread pitch of mating threads in a mating threaded bore in which the lead screw moves. Likewise, deterioration in pump precision over time will be affected, at least in part, by wear of the lead screw threads and mating threads.

If the pressure in a syringe pump chamber is continuously measured during operation of the pump so as to produce a constant nominal fluid flow rate through a flow resistive tubing (e.g., resistive tubing **6c** in FIG. 2) or other component with constant fluid flow resistance, then the pressure is observed to follow a pattern such as indicated in graph **400** of FIG. 10. The two curves - curve **402** and curve **404** - shown in FIG. 10 represent pump chamber pressure measured during two separate operations of a pump so as to pump water through a resistive tubing an a nominal constant flow rate of 200 µL/min. The pressure variation so measured is observed to vary cyclically with a periodicity that corresponds to the time for the lead screw to undergo a single rotation. In regards to the data plotted in FIG. 10, the average oscilatory pressure fluctuation is approximately five-percent of the total pressure, which is found to be normal for a new pump. Since the flow rate will approach a uniform average value over several cycles, this oscillatory pressure profile may be tolerable, depending upon the needs of users. However, some applications may require a tight tolerance on flow rates and measurements such as those shown in FIG. 10 may be employed to determine if a particular pump is within tolerance. Further, for any pump, the trend of Δ*P* may be monitored over the working lifetime of the pump, with any increase in this quantity being used to predict when wear on the pump mechanical parts will require pump maintenance or replacement.

### Example 5 - Detecting Leaks, Bubbles and Blockages in System

The pressure monitoring techniques described above in the context of detecting leaks of or air bubbles in syringe pumps may also be employed to detect problems relating to the fluidic components of an LSMS system. For instance, if there is a blockage in a fluid tubing line or other component, then the observed pressure should be higher than expected for a normally operating clean system. On the other hand, leaks may be detected by intentionally blocking or plugging one component of the LSMS system, pressurizing the portion of the fluidic system between the pump and the intentional blockage and, then, monitoring for any unusually high decreases in pressure.

In order to identify a particular portion of an LCMS fluidic system that is responsible for a problem, it is necessary to fluidically isolate specific portions of the system. One means of accomplishing such isolation is by replacing the two-column chromatographic cartridge **40** (FIG. 4B, FIGS. 7A-7C) with a special test cartridge that is employed only for system test purposes. Since the two-column chromatographic cartridge **40** is designed as a replaceable module, the replacement cartridge should be designed so as to be easily swapped for the column-containing cartridge and to allow for easy re-insertion of the column-containing cartridge.

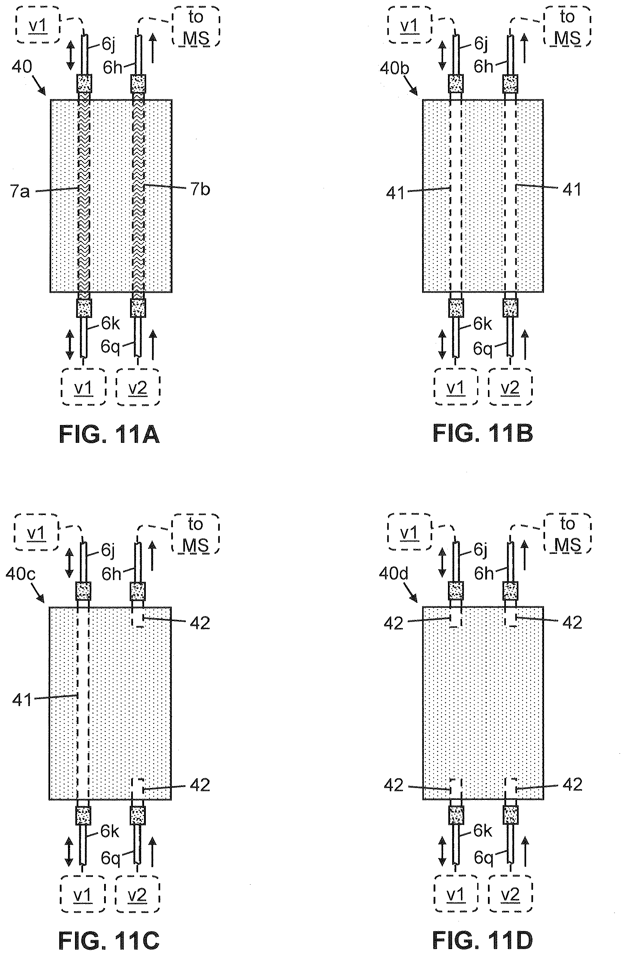

FIG. 11A illustrates the two-column chromatographic cartridge **40** having a first column **7a** and a second column **7b.** FIG. 11B shows a first test-related cartridge **40b** that is designed to be swappable with the cartridge **40.** In the test-related cartridge **40b,** the columns **7a, 7b** are replaced by two simple tubes **41** which are designed to permit unrestricted flow through the cartridge **40b.** By using the test-related cartridge **40b,** fluid can be routed through an entire LCMS system so as to detect any blockages. FIG. 11C illustrates a second test-related cartridge **40c,** which is related to the two-column cartridge **40** by replacement of first column **7a** with a simple tube **41** that permits unrestricted flow between fluid tubing lines **6j** and **6k** and replacement of the column **7b** by one or more plugs **42** so as to prevent flow between fluid tubing lines **6q** and **6h.** This configuration permits one portion of the fluidic system to be isolated for detection of leaks or bubbles within that portion while permitting free flow through the other section. FIG. 11D illustrates a third test-related cartridge **40d,** which is related to the two-column cartridge **40** by replacement of both chromatographic columns **7a, 7b** with plugs or other blockages **42.**

The test-related cartridges illustrated in FIG. 11 are just a few examples. One can also easily envision an alternative cartridge configuration, for instance, in which unrestricted fluid flow is permitted between fluid tubing lines **6q** and **6h** while the coupling between fluid tubing lines **6j** and **6k** is plugged or otherwise blocked. One can also easily envision other cartridge configurations which include a chromatographic column in one position with the other position occupied by a tube **41** or by one or more plugs **42.**

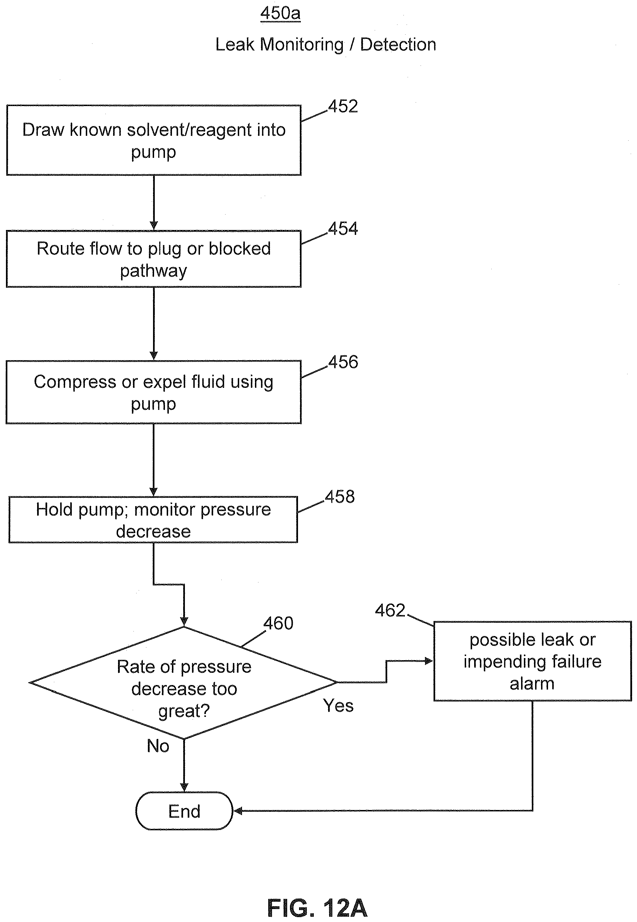

FIG. 12A is a flow diagram of a general method for monitoring or detection of leaks in a liquid chromatography system, in accordance with the discussion in Example 5. The method **450a** illustrated in FIG. 12A may be applied to leak detection and monitoring of pumps but, more generally, may also be applied to leak detection and monitoring throughout an entire fluidic system. Steps **452-458** of the method **450a** are the same steps shown in and already discussed in regard to FIG. 13. However, it is here noted that the "blocked pathway" referred to in Step **454** need not be limited to the vicinity of a pump but may be placed anywhere in the fluidic system. Thus, the blocked pathway may be associated with any component anywhere in the system, such as a valve or an insertable and removable plug, or an insertable or removable cartridge, etc., which may be configured to inhibit flow past the blockage. Multiple such intentional blockages may be employed, in sequence, at different points within the fluidic system so as to isolate and identify any leaks. In Step **456** of the method **450a,** the compression of the fluid may occur not only in a pump but also within a portion of the fluidic system. Thus, some fluid may be necessarily expelled from the pump into the portion of the fluidic system. The pressure monitoring in Step **458** should preferably be performed with a pressure sensor in close proximity to the fluidic system portion of interest. If, in the decision step (Step **460**) the pressure decrease determined in Step **458** exceeds a certain pre-determined threshold, then an alarm is raised or a notification made in Step **462.**

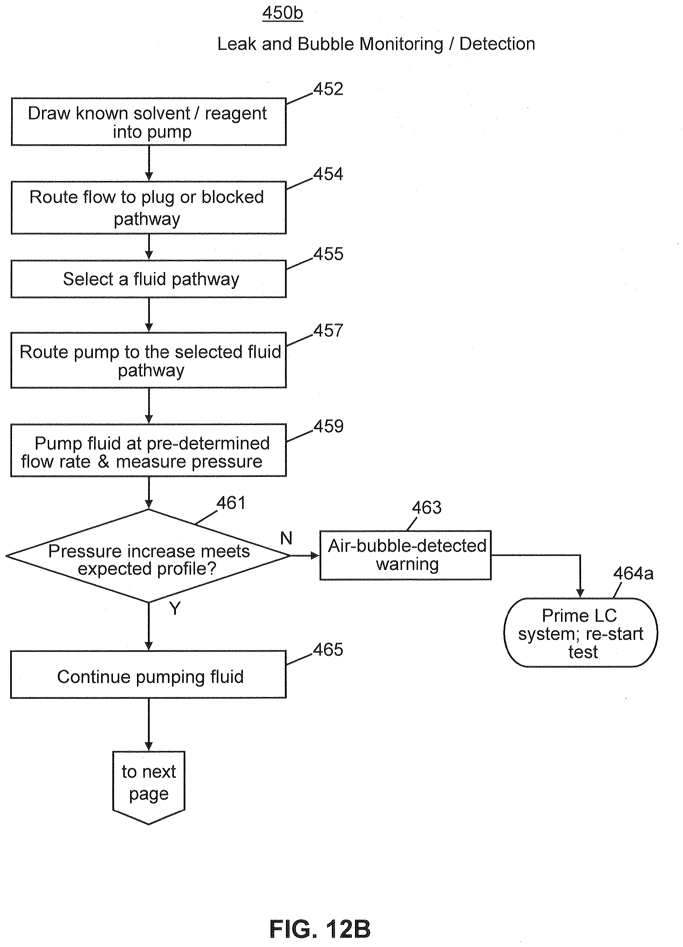

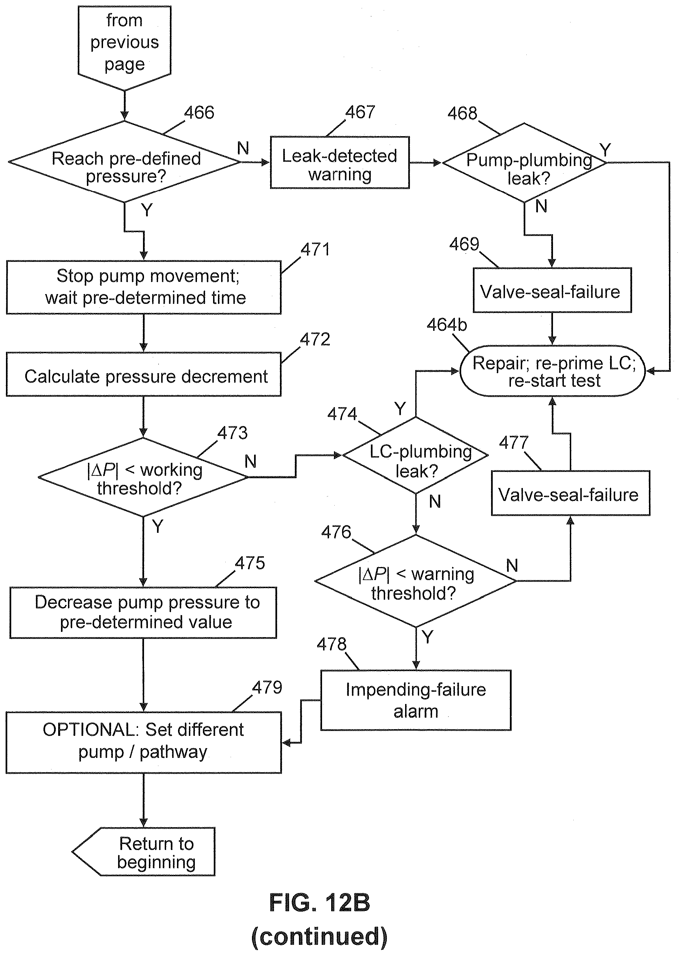

FIG. 12B is a flow diagram of a second method for monitoring or detection of leaks in a liquid chromatography system in accordance with the present teachings. The method **450b** illustrated in FIG. 12B is somewhat similar to the method **450a** (FIG. 12A) but includes additional provisions for monitoring multiple fluid pathways within an LC system, for detecting bubbles, for warning of impending pump failure and for at least partially isolating the locations of leaks. The first steps - Step **452** of drawing in a known solvent or other fluid and Step **454** of routing flow to an intentionally blocked pathway - of the method **450b** are the same as the corresponding steps in the method **450a.** Then, in Step **455** and Step **457,** respectively, a fluid pathway is selected and the system is configured - such as by configuring one or more valves - so as to route the pump output to the selected fluid pathway. In Step **459,** the fluid is pumped into the fluid pathway at a predetermined flow rate while the pressure is simultaneously measured.

In the decision step **461** of the method **450b,** if the pressure increase meets the expected pressure increase profile - that is, if the pressure increase is not less than that expected from a pre-determined profile, within tolerance - then pumping continues at Step **465.** Otherwise (if the pressure increase is less than that expected), then one or more air or gas bubbles or pockets are interpreted to be present in the fluid pathway and a warning or notification of this condition is provided at Step **463.** At this point, the method terminates (Step **464a**) so that a user or technician may prime the LC system, after which the method may be started again from the beginning.

After a period of pumping fluid into the selected pathway (Step **465**), a determination is made (in Step **466**) as to whether the selected fluid pathway is capable of achieving some pre-defined pressure within a prescribed time or within a prescribed movement of the pump piston. If not, then a leak in either the pump plumbing system or the valve seal is interpreted to be present and a warning or notification to this effect is made in Step **467.** If the presumed leak is determined not to be in ancillary pump plumbing components (Step **468**) than a notification or warning of a valve seal failure may be made in Step **469.** At this point, the method terminates (Step **464b**) so that a user or technician may make any necessary repairs and prime the LC system. After making such repairs and priming, the method may be started again from the beginning.

If it is determined, in Step **466,** that the selected fluid pathway is capable of achieving the pre-defined pressure within the prescribed time or piston movement, then pump movement is stopped (Step **471**) and pressure decrease is monitored for a certain pre-determined length of time. If the change in pressure within the pre-determined time is denoted as the negative quantity Δ*P*, then the pressure decrement - that is, the amount by which the pressure decreases - is given as |Δ*P*|. This pressure decrement is determined in Step **472** and, a subsequent determination is made in Step **473** as to whether this pressure decrement is less than a pre-defined normal working threshold. The normal working threshold is defined such that, if the pressure decrement is less than this threshold, then the fluidic components within the selected pathway are presumed to be operating normally.

If the pressure decrement as defined above is greater than or equal to the working threshold value, then a leak is presumed to be present either in fluidic plumbing components of the pathway or in a valve seal of a valve within the pathway. If, in Step **474,** it is determined - possibly by visual inspection - that there are leaks in the LC plumbing system, then the method terminates at Step **464b.** Otherwise, if there are no leaks in the plumbing system, then a determination is made (Step **476**) as to whether the pressure decrement is less than a warning threshold. This determination may be considered to be a test of the severity of any valve-seal leak. A pressure decrement above the normal working threshold but below the warning threshold (the warning threshold value being always greater than the normal working threshold value) is interpreted to mean that a valve seal, while presently still useable, is in danger of failing in the near future. In such a situation, a warning to this effect is provided in Step **478,** after which a different fluid pathway may be set in Step **479.** If the pressure decrement is determined, in Step **476,** to be greater than or equal to the warning threshold, then a valve-seal failure has occurred and a notification to this effect is provided in Step **477** and the method terminates at Step **464b.**

Step **475** of the method **450b** (FIG. 12B) is executed if the pressure decrement has been determined (Step **474**) to be less than the normal working threshold. In Step **475,** the pump pressure is decreased to some pre-determined value, after which a different fluid pathway may be selected in Step **479** so that the method **450b** may be employed, from the beginning, to test the different pathway.

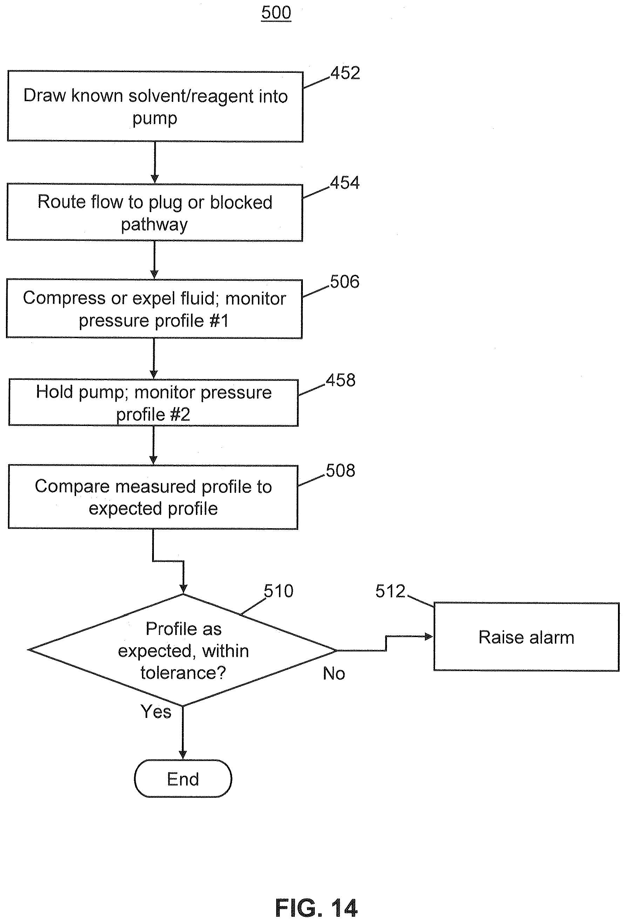

Method **500** illustrated in flowchart form in FIG. 14 is a further generalization of the previously discussed methods **480** (FIG. 13) and 450a (FIG. 12A). Thus, although Steps **452, 454** and **458** of the method **500** are as previously described, the method includes a new step, Step **506,** that replaces the previously described Step **456.** In Step **506,** pressure is monitored during the compression step so as to produce a first segment (segment #1) of a pressure profile. This is combined with the decreasing pressure profile (segment #2) measured in Step **458** to yield a multiple-segment pressure profile. The measured multi-segment profile is compared, in Step **508,** to a multi-segment expected profile, such as the schematic profile illustrated in FIG. 9A. If the measured multi-segment profile is not the same as the expected profile, within a tolerance (Step **510**), then an alarm is raised (Step **512**). For example, by comparing pressure changes during the compression step (i.e., segment #1) to expected values, air or gas bubbles within the general fluidic system may be detected. Such bubbles will be observed as an initial delay in pressure increase, relative to expected profiles. In principle, multiple intentional blockages may be employed, in sequence, at different points within the fluidic system so as to isolate and identify the location of any included air or gas bubbles.

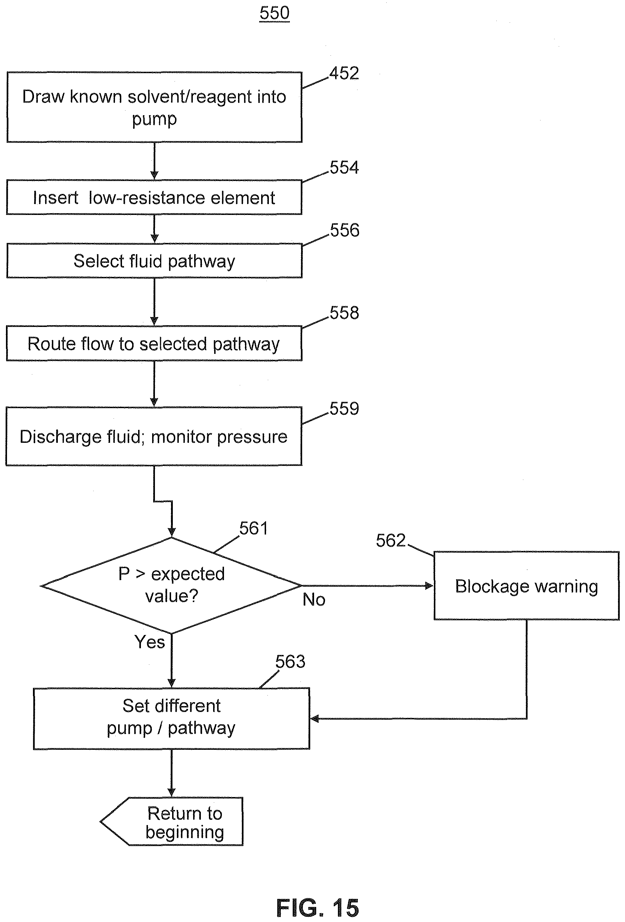

FIG. 15 illustrates another method for monitoring a liquid chromatography system, in accordance with the present teachings. The first step, Step **452,** of the method **550** (FIG. 15) is as previously described and comprises drawing a known solvent or reagent into a pump. In the next step, Step **554,** the flow is routed through either an un-blocked fluidic pathway or through a fluidic pathway comprising a known low resistance to fluid flow. In this context, an "un-blocked" pathway is a pathway within which an ordinarily-employed flow-resistive component has been temporarily replaced, for testing or monitoring purposes, by a simple tubing or otherwise open conduit, thereby enabling free flow through the tubing or conduit and downstream portions of the fluidic pathway. For example, the replacement tubing or conduit may replace one or more chromatographic columns so as to permit free flow of fluid through and past the nominal location of the column. The tubing segments **41** in the special test-related cartridges **40b** and **40c** (FIGS. 11B-11C) are examples of such temporarily installed open pieces of tubing. The fluid routing may be accomplished by means of configuring a valve, as has been previously described herein.

In Step **556** of the method **550** (FIG. 15), a particular fluid pathway is selected. Then in Step **558,** various valves may be configured to route the the solvent, reagent or other fluid to the selected pathway. In Step **559,** the fluid is at least partially discharged from the pump and thereby caused to flow using a pre-defined or a real-time-calculated flow rate through the low resistance element or un-blocked pathway of the fluidic system (as provided in Step **554**), during which fluid pressure is monitored in real-time. The accumulated fluid pressure data comprises a measured pressure profile, which is compared to an expected pressure profile in Step **561.** Alternatively, one or more individual pressure data points (at certain times) may be employed, instead of a full profile. If the measured profile (or value of a measured pressure data point) is greater than, within a tolerance, the expected or specified profile or value (Step **561**), then an alarm is raised or other notification provided (Step **562**) that flow through at least a portion of the system is blocked. The entire procedure may be repeated with a different selected pathway (Step **563**). The expected profile may depend upon the particular fluid properties of the known solvent. The entire pressure profile or any portion of the pressure profile may be employed for making the comparison in the decision step **561.**

### Example 6 - Real-Time Pressure Compensation

Using the LCMS system configurations illustrated in FIGS. 7A-7C, it is possible for pressure imbalances to develop between different sections of an overall system. Real-time pressure monitoring and compensation may be employed to re-balance the pressures. At least two different scenarios, described below, are possible.

In a first pressure-compensation scenario, two initially mutually isolated portions of a fluidic system are initially pressurized at different respective pressures. The different pressures could arise as simply as a consequence of one pump - associated with the first portion - being inactive at the time that a second pump - associated with the second portion - is operating. The different pressures could also variously arise as a consequence of different fluid properties, different required flow rates or different inherent flow resistances in the two portions. In this scenario, the two portions are subsequently fluidically coupled for the purpose of blending or mixing of the fluids. The fluidic coupling between the two system portions may be brought about by re-configuring a valve, for instance. When the two portions are fluidically interconnected, conventional systems will experience a sudden pressure drop in the portion that was initially at the higher pressure.

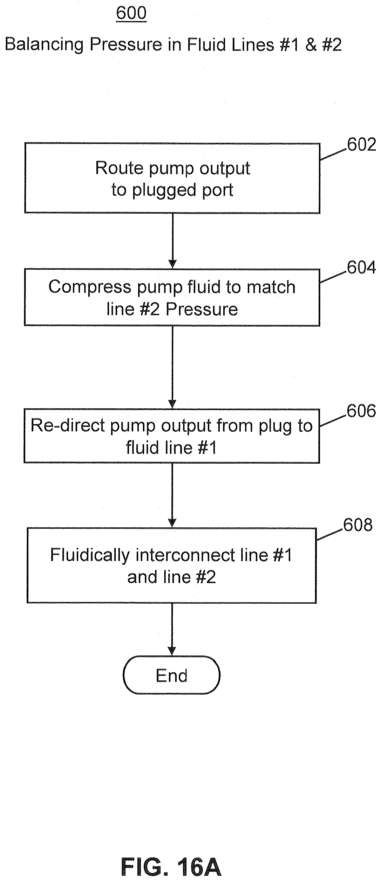

To prevent an unwanted pressure drop from occurring in the scenario described above, the following steps, according to the instant teachings and outlined in FIG. 16A, may be employed: (a) directing the output of the pump associated with the lower-pressure portion (fluid line #1, for identification purposes) to a plugged output (Step **602** of method **600** shown in FIG. 16A); (b) compressing the fluid within the pump while monitoring the pressure of the higher pressure portion (fluid line #2), thereby matching the pressure in the pump to the pressure in fluid line #2 (Step **604**); directing the output of the pump to the fluid line #1 so at to increase the pressure within fluid line #1 (Step **606**); and fluidically interconnecting fluid line #1 and fluid line #2 (Step **608**). Step **602** of directing the pump output to a plugged output may be performed, for example, by rotating an appropriate rotary valve **9r** (FIGS. 2, 7) to one of the plug positions shown by cross-hatching, such as plug position **p1** illustrated in FIG. 2.

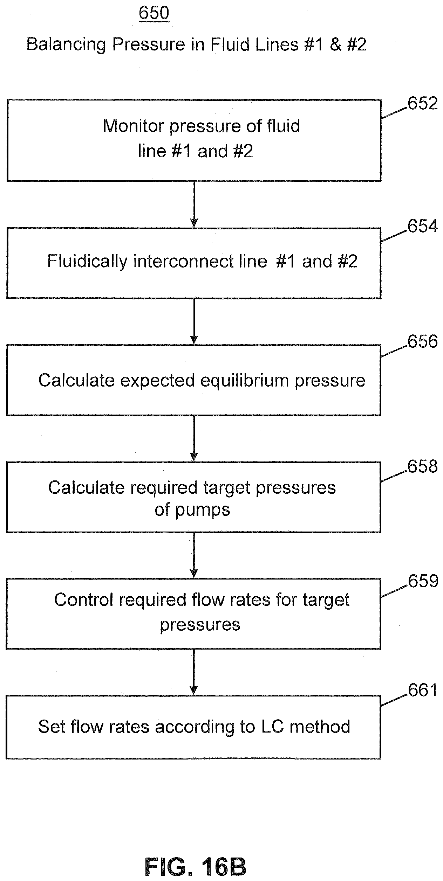

FIG. 16B is a flow diagram of a method for compensating pressure differences in two fluid lines which are to be employed for fluid flow at flow rates specified by a particular liquid chromatography method. In Step **652,** the pressures of fluid line #1 and fluid line #2 are monitored or measured. Then, in Step **654,** the two fluid lines are interconnected, such as by configuring one or more interconnection valves. In Step **656,** an expected final equilibrium pressure (or pressures) is (are) calculated based on the pressures before interconnection and as a function of flow rate. In Step **658,** the target pressures of the pumps are set at the expected equilibrium pressure or respective pressures by, for example, compressing fluid within the pumps against plugged output ports. Then, in Step **659,** the flow rates are controlled so as to reach the target pressure using a control algorithm such as the well-known proportional-integral-derivative (PID) control algorithm. Finally, in Step **661,** the flow rates are rates are re-set to the specific flow rates specified in a particular liquid chromatographic method that is to be performed by the system.

In another pressure-compensation scenario, pressure compensation may be employed so as to balance pressure differences between a loading pump sub-system, perhaps configured similar to sub-system **200** shown in FIG. 7A and an eluting pump sub-system, possibly configured similar to sub-system **250** or sub-system **270** illustrated in FIG. 7B and FIG. 7C, respectively. For example, if column **7a** (FIGS. 4, 5 and 7) is a TurboFlow^{®} column as described above and column **7b** is an analytical column, then the fluid directed from the loading pump system into valve **v1** and column **7a** will generally be at a nominal operating pressure of 3-7 MPa and the fluid directed from the eluting pump into valve **v2** will generally be at a nominal operating pressure of 30-40 MPa.

In many systems, and as is shown in middle diagram of FIG. 5, the rotary valve **v2** of valve system **45** has an internal structure which enables three adjacent ports to be fluidically simultaneously interconnected. This valve structure enables, for instance, separate fluid flows from fluid tubing lines **6n** and **6s,** respectively from the loading and eluting sub-systems, to be mixed in valve **v2** and output, as a mixture, to fluid tubing line **6q.** In order to prevent a sudden pressure drop and consequent incorrect flow of fluid when the elution begins, a check valve (not shown) may be provided in the fluidic system between an operative loading pump and the point at which the fluid pathways from the loading pump sub-system and eluting pump sub-system converge. The check valve will not operate so as to permit flow from the loading pump system until the pressure is equalized. Then, with valve v2 configured for elution, the pressure applied by the loading pump is ramped higher as fast as possible until equal pressures exist on both sides of the check valve.

### Example 7 - Pre-Compression and Pre-Pressurization

Using the LCMS system configurations illustrated in FIGS. 7A-7C, it is occasionally necessary to execute a pre-compression step - prior to directing fluid flow through a chromatographic column - so as to ramp the fluid pressure up to a nominal operating pressure for applications employing the column. In the case of loading analytes onto a TurboFlow^{®} column (described above), the nominal operating pressure and flow rate are generally specified by a user as part of a chromatographic method. However, because of the behavior of the column, some flow-through time is required for the fluid in the column to come up to the correct pressure. As a result of this behavior, the initial flow of sample into the TurboFlow^{®} column may not occur at the user-specified pressure. Accordingly, prior to performing the first step (Step 1) of the user method, the pressure of a pump that is used to load the column may first be directed to a plugged port. With the pump output so configured, the fluid in the pump compressed so as to initially ramp up the pump pressure, prior to directing the sample into the column. Performing this pre-pressurization step allows the entire sample loading step (or other flow-through step, depending on the type of column) to be performed at the correct pressure.

### Example 8 - Combined Fluid Monitoring and Pump Diagnostics

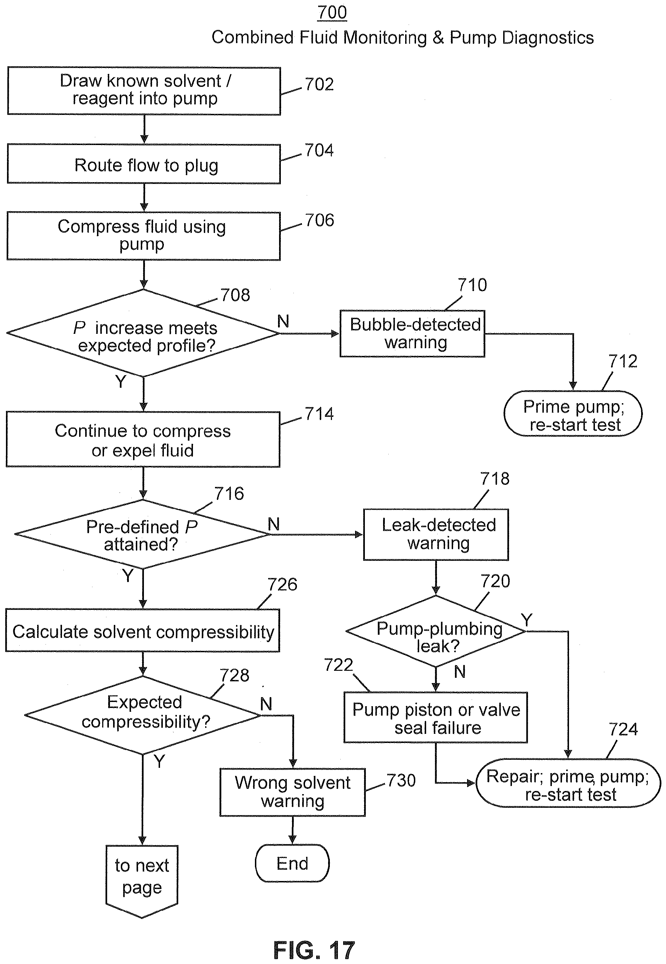

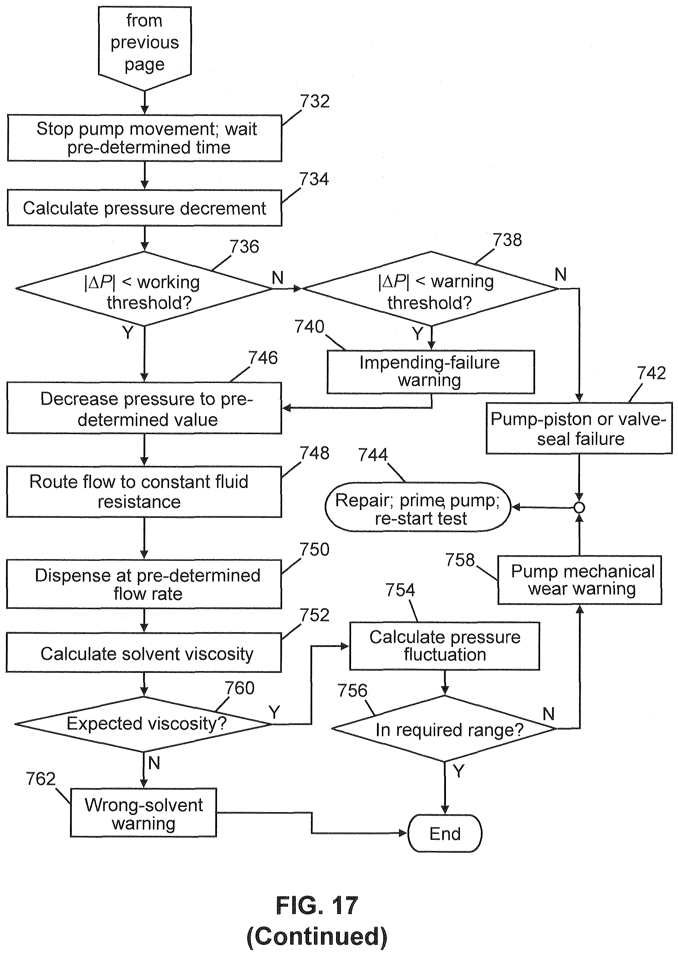

The method **700** illustrated in flowchart form in FIG. 17 combines both fluid monitoring and generation of pump diagnostic information. In the first step, step **702,** of the method **700** (FIG. 17), a known solvent or reagent is drawn into a syringe pump. In step **704,** the fluid flow is routed to a plugged output port such as, for instance, a port of multiple-port rotary selection valve that is in proximity to the pump. In Step **706,** the pump piston is caused to move at a pre-determined rate in a direction which compresses the fluid between the piston and the plug.

In the decision step **708** of the method **700,** if the pressure increase meets the expected pressure increase profile - that is, if the pressure increase is not less than that expected from a pre-determined profile, within a tolerance - then pumping continues at Step **714.** Otherwise (if the pressure increase is less than that expected), then one or more air or gas bubbles or pockets are interpreted to be present in the fluid pathway and a warning or notification of this condition is provided at Step **710.** At this point, the method terminates (Step **712**) so that a user or technician may prime the LC system, after which the method may be started again from the beginning.

After a period of continued compression (Step **714**), a determination is made (in Step **716**) as to whether the pump is capable of achieving some pre-defined pressure. If not, then a leak in either the pump plumbing system or the or the pump (e.g., valve seal or pistion) is interpreted to be present and a warning or notification to this effect is made in Step **718.** If the presumed leak is determined not to be in ancillary pump plumbing components (Step **720**) than a notification or warning of a pump piston or valve seal failure may be made in Step **722.** At this point, the method terminates (Step **724**) so that a user or technician may make any necessary repairs and prime the LC system. After making such repairs and priming, the method may be started again from the beginning.

If the pre-defined pressure has been attained, then solvent compressibility is calculated in **726** using the amount of piston movement required to achieve the pre-defined pressure. If the compressibility is not as expected for a presumed solvent or other fluid, then a wrong-solvent warning is provided in step **730** and the method terminates. If, however, the compressibility is determined to be as expected, within a tolerance, then pump movement is stopped (Step **732**) and pressure decrease is monitored for a certain pre-determined length of time. The pressure decrement, |Δ*P*|, is determined in Step **734** and, a subsequent determination is made in Step **736** as to whether this pressure decrement is less than a pre-defined normal working threshold. The normal working threshold is defined such that, if the pressure decrement is less than this threshold, then the pump and any associated components are presumed to be operating normally. If the pressure decrement as calculated in Step **734** is greater than or equal to the working threshold value, then a leak is presumed to be present either in the pump or associated components. If the pressure decrement is further determined, in Step **738,** to be greater than or equal to a warning threshold, then a failure has occurred in either the pump or an associated component and a notification to this effect is provided in Step **742.** (Note that the warning threshold value is always greater than the normal working threshold value.) After the notification provided in Step **742,** the method terminates at Step **744,** so that the pump may be repaired or replaced and the system re-primed.

A pressure decrement above the normal working threshold as determined in Step **736** but below the warning threshold as determined in Step **738** is interpreted to mean that a pump component, such as a piston, or a related component, such as a valve seal, while presently still useable, is in danger of failing in the near future. In such a situation, a warning to this effect is provided in Step **740,** after which Step **746** is entered.

Step **746** is executed if the pressure decrement is determined to be below the warning threshold. In Step **746,** the pressure is decreased to a certain pre-determined value. Then, in Step **748,** the flow is routed to a pathway having a constant fluid flow resistance, and caused to flow at a pre-determined flow rate in Step **750** while pressure is monitored. In Step **752,** the viscosity of the fluid is calculated using an average monitored pressure. If it is determined (Step **760**) that the fluid viscosity is not as expected for a presumed fluid, then a wrong-solvent warning or notification is provided in Step **762** and the method terminated. However, if the calculated viscosity is as expected, within a tolerance, then a pressure fluctuation, versus time or piston movement, is determined (in Step **754**) using the pressure variation that was monitored in Step **750.** For example, the pressure fluctuation could be similar to the periodic curves **402** and **404** shown in FIG. 10. In this situation, a range of the fluctuation could be determined as the average or possibly maximum peak-to-peak pressure variation or as a standard deviation of the fluctuation or could be determined in some other fashion. Regardless of the method by which the range is characterized, a range greater than a certain pre-determined range threshold, as determined in Step **756,** is taken as an indication of excessive mechanical wear in moveable pump parts. Accordingly, a fluctuation range greater than the threshold (Step **756**) will cause a mechanical-wear warning or notification to be provided in Step **758,** after which the method terminates at Step **744,** so that the pump may be repaired or replaced and the system re-primed.

All of the pump-diagnostic methods and system-diagnostic methods described in certain of the examples given above may be performed at certain dedicated system-test times when no chromatographic separations of samples are being run. However, since many liquid chromatography methods necessarily require pre-compression and pressure ramping, the system monitoring can be built in and can occur automatically when running the various user-specified liquid chromatography methods methods.

An improved liquid chromatography system has been disclosed. Advantageously, a system in accordance with the present teachings may be employed in an automated sample preparation and analysis system, such as is disclosed in a co-pending International (PCT) application for patent titled "Automated System for Sample Preparation and Analysis" (Attorney Docket No. TFS-13AWO, Application No. PCT/US11/58452) filed on October 28, 2011. In various embodiments, the automated sample preparation and analysis system includes a sample preparation system for preparing various samples and a sample analysis system, which may include a liquid chromatography mass spectrometer ("LCMS") for analyzing the prepared samples according to selected analyte assays. The sample preparation system and the sample analysis system are interconnected in an automated manner. The automated sample preparation and analysis system is designed to generally operate with minimal operator intervention or maintenance and includes at least one controller for, *inter alia,* controlling valve configurations and, optionally, monitoring operational or instrumental conditions. Because of the automated nature of the instrument, it is advantageous for the automated system to be able to monitor its own configuration and operating state and to provide an alert an operator if the system detects any possible problems. A system for liquid chromatography in accordance with the present teachings may assist in these functions.

The discussion included in this application is intended to serve as a basic description. Although the present invention has been described in accordance with the various embodiments shown and described, one of ordinary skill in the art will readily recognize that there could be variations to the embodiments and those variations would be within the scope of the present invention. The reader should be aware that the specific discussion may not explicitly describe all embodiments possible; many alternatives are implicit. For example, it is easy to envisage that various sub-sets of steps provided in flowcharts herein may be combined with sub-sets of steps from different flowcharts to arrive at augmented or hybridized methods. Accordingly, many modifications may be made by one of ordinary skill in the art without departing from the scope of the invention as defined by the appended claims. Neither the description nor the terminology is intended to limit the scope of the invention.

## Claims

1. A method for monitoring a fluidic system (50) of a liquid chromatography system comprising a syringe pump (1 1s) having a piston, a multi-port valve (9r) having a port (p0) configured to, in operation, both deliver fluid to and receive fluid from the syringe pump (1 1s), and a container (8) having a known fluid therein, the method comprising:
(a) drawing the fluid from the container (8) into the syringe pump (1 1s);
(b) configuring the multi-port valve (9r) so as to fluidically couple the syringe pump (1 1s) to, in a first valve configuration, a port of the multi-port valve (9r) that is coupled to a fluidic pathway having an intentional flow blockage therein that prevents flow through the fluidic system (50) beyond the intentional flow blockage, wherein the intentional flow blockage is provided in a test-related cartridge (40b, 40c) that is disposed within the fluidic system (50) at a nominal position of a two-column-bearing cartridge (7) and that is interchangeable with the two-column-bearing cartridge (7), the test-related cartridge (40b, 40c) comprising a plugged line (6q, 6h) at the nominal position of a first chromatographic column (7b) of the two-column-bearing cartridge (7);
(c) causing the piston of the syringe pump (11s) to move at a predetermined rate in a direction so as to, if the multi-port valve (9r) is in the first valve configuration, progressively compress the fluid therein while measuring a pressure of the fluid or to, if the multi-port valve (9r) is in the second valve configuration, expel the fluid to the fluidic pathway while measuring a pressure of the fluid;
(d) determining a profile of the variation of the measured pressure for the time that the piston is caused to move;
(e) comparing the determined profile to an expected profile that depends upon the fluid; and
(f) providing a notification of a sub-optimal operating condition or malfunction if the determined profile varies from the expected profile by greater than a predetermined tolerance.

2. A method as recited in claim 1, wherein the test-related cartridge (40b, 40c) further comprises a length of empty tubing (41) at the nominal position of a second chromatographic column (7a) of the two-column-bearing cartridge (7).

3. A method as recited in claim 1 or claim 2, wherein the step (f) of providing a notification comprises providing a notification that an air or gas bubble is present within the fluidic system (50) if the determined pressure profile includes a delay in an increase in pressure, relative to the expected profile.

4. A method for monitoring a fluidic system (50) of a liquid chromatography system comprising a syringe pump (1 1s) having a piston, a multi-port valve (9r) having a port (p0) configured to, in operation, both deliver fluid to and receive fluid from the syringe pump (11s), and a container (8) having a known fluid therein, the method comprising:
(a) drawing the fluid from the container (8) into the syringe pump (11s);
(b) configuring the multi-port valve (9r) so as to fluidically couple the syringe pump (1 1s) to, in a first valve configuration, a port of the multi-port valve (9r) that is coupled to a fluidic pathway including a length of empty tubing (41), wherein the length of empty tubing (41) is provided in a test-related cartridge (40) that is disposed within the fluidic system (50) at the nominal position of a two-column-bearing cartridge (7) and that is interchangeable with the two-column-bearing cartridge (7), said length of empty tubing (41) being disposed at the nominal position of a chromatographic column (7a) of the two-column-bearing cartridge (7);
(c) causing the piston of the syringe pump (11s) to move at a predetermined rate in a direction so as to, if the multi-port valve (9r) is in the first valve configuration, progressively compress the fluid therein while measuring a pressure of the fluid or to, if the multi-port valve (9r) is in the second valve configuration, expel the fluid to the fluidic pathway while measuring a pressure of the fluid;
(d) determining a profile of the variation of the measured pressure for the time that the piston is caused to move;
(e) comparing the determined profile to an expected profile that depends upon the fluid; and
(f) providing a notification of a sub-optimal operating condition or malfunction if the determined profile varies from the expected profile by greater than a predetermined tolerance
wherein step (f) of providing a notification comprises providing a notification that the fluid pathway is blocked if the determined pressure profile includes a pressure increase that exceeds an expected increase in pressure by greater than the predetermined tolerance.

5. A method as recited in claim 4, wherein the step (f) of providing a notification comprises providing a notification that an air or gas bubble is present within the fluidic system (50) if the determined pressure profile includes a delay in the increase in pressure, relative to an expected pressure profile.

## Patentansprüche

1. Verfahren zur Überwachung eines Fluidiksystems (50) eines Flüssigchromatographiesystems, das eine Spritzenpumpe (11s) mit einem Kolben, ein Mehrfachanschlussventil (9r) mit einem Anschluss (p0), der so konfiguriert ist, dass er im Betrieb sowohl Fluid an die Spritzenpumpe (11s) abgibt als auch Fluid von ihr aufnimmt, und einen Behälter (8) mit einem bekannten Fluid darin umfasst, das Verfahren umfassend:
(a) Ziehen des Fluids aus dem Behälter (8) in die Spritzenpumpe (11s);
(b) Konfigurieren des Mehrfachanschlussventils (9r), um die Spritzenpumpe (11s) in einer ersten Ventilkonfiguration mit einem Anschluss des Mehrfachanschlussventils (9r) fluidisch zu koppeln, der mit einem Fluidweg gekoppelt ist, der eine beabsichtigte Strömungsblockade aufweist, die ein Strömen durch das Fluidsystem (50) über die beabsichtigte Strömungsblockade hinaus verhindert, wobei die absichtliche Strömungsblockade in einer testbezogenen Kartusche (40b, 40c) bereitgestellt wird, die innerhalb des Fluidiksystems (50) an einer nominalen Position einer zweisäuligen Kartusche (7) angeordnet ist und die mit der zweisäuligen Kartusche (7) austauschbar ist, wobei die testbezogene Kartusche (40b, 40c) eine verstopfte Leitung (6q, 6h) an der nominalen Position einer ersten chromatographischen Säule (7b) der zweisäuligen Kartusche (7) umfasst;
(c) Bewirken, dass sich der Kolben der Spritzenpumpe (11s) mit einer vorbestimmten Rate in eine Richtung bewegt, um, wenn sich das Mehrfachanschlussventil (9r) in der ersten Ventilkonfiguration befindet, das darin befindliche Fluid progressiv zu komprimieren, während ein Druck des Fluids gemessen wird, oder um, wenn sich das Mehrfachanschlussventil (9r) in der zweiten Ventilkonfiguration befindet, das Fluid in den Fluidweg auszustoßen, während ein Druck des Fluids gemessen wird;
(d) Bestimmen eines Profils der Variation des gemessenen Drucks für die Zeit, in der der Kolben in Bewegung gesetzt wird;
(e) Vergleichen des bestimmten Profils mit einem erwarteten Profil, das von dem Fluid abhängt; und
(f) Bereitstellen einer Benachrichtigung über einen suboptimalen Betriebszustand oder eine Fehlfunktion, wenn das bestimmte Profil um mehr als eine vorbestimmte Toleranz vom erwarteten Profil abweicht.

2. Verfahren nach Anspruch 1, wobei die testbezogene Kartusche (40b, 40c) ferner eine Länge eines leeren Röhrchens (41) an der nominalen Position einer zweiten chromatographischen Säule (7a) der zweisäuligen Kartusche (7) umfasst.

3. Verfahren nach Anspruch 1 oder Anspruch 2, wobei der Schritt (f) des Bereitstellens einer Benachrichtigung das Bereitstellen einer Benachrichtigung über das Vorhandensein einer Luft- oder Gasblase innerhalb des Fluidiksystems (50) umfasst, wenn das bestimmte Druckprofil eine Verzögerung eines Druckanstiegs im Vergleich zum erwarteten Profil einschließt.

4. Verfahren zur Überwachung eines Fluidiksystems (50) eines Flüssigchromatographiesystems, das eine Spritzenpumpe (11s) mit einem Kolben, ein Mehrfachanschlussventil (9r) mit einem Anschluss (p0), der so konfiguriert ist, dass er im Betrieb sowohl Fluid an die Spritzenpumpe (11s) abgibt als auch Fluid von ihr aufnimmt, und einen Behälter (8) mit einem bekannten Fluid darin umfasst, das Verfahren umfassend:
(a) Ziehen des Fluids aus dem Behälter (8) in die Spritzenpumpe (11s);
(b) Konfigurieren des Mehrfachanschlussventils (9r), um die Spritzenpumpe (11s) in einer ersten Ventilkonfiguration mit einem Anschluss des Mehrfachanschlussventils (9r) zu koppeln, der mit einem Fluidweg einschließlich einer Länge eines leeren Röhrchens (41) eingeschlossen ist, wobei die Länge des leeren Röhrchens (41) in einer testbezogenen Kartusche (40) bereitgestellt wird, die innerhalb des Fluidiksystems (50) an der nominalen Position einer zweisäuligen Kartusche (7) angeordnet ist und die mit der zweisäuligen Kartusche (7) austauschbar ist, wobei die Länge des leeren Röhrchens (41) an der nominalen Position einer chromatographischen Säule (7a) der zweisäuligen Kartusche (7) angeordnet ist;
(c) Bewirken, dass sich der Kolben der Spritzenpumpe (11s) mit einer vorbestimmten Rate in eine Richtung bewegt, um, wenn sich das Mehrfachanschlussventil (9r) in der ersten Ventilkonfiguration befindet, das darin befindliche Fluid progressiv zu komprimieren, während ein Druck des Fluids gemessen wird, oder um, wenn sich das Mehrfachanschlussventil (9r) in der zweiten Ventilkonfiguration befindet, das Fluid in den Fluidweg auszustoßen, während ein Druck des Fluids gemessen wird;
(d) Bestimmen eines Profils der Variation des gemessenen Drucks für die Zeit, in der der Kolben in Bewegung gesetzt wird;
(e) Vergleichen des bestimmten Profils mit einem erwarteten Profil, das von dem Fluid abhängt; und
(f) Bereitstellen einer Benachrichtigung über einen suboptimalen Betriebszustand oder eine Fehlfunktion, wenn das bestimmte Profil um mehr als eine vorbestimmte Toleranz vom erwarteten Profil abweicht,
wobei Schritt (f) des Bereitstellens einer Benachrichtigung das Bereitstellen einer Benachrichtigung umfasst, dass der Fluidweg blockiert ist, wenn das bestimmte Druckprofil einen Druckanstieg einschließt, der einen erwarteten Druckanstieg um mehr als die vorbestimmte Toleranz überschreitet.

5. Verfahren nach Anspruch 4, wobei der Schritt (f) des Bereitstellens einer Benachrichtigung das Bereitstellen einer Benachrichtigung über das Vorhandensein einer Luft- oder Gasblase innerhalb des Fluidiksystems (50) umfasst, wenn das bestimmte Druckprofil eine Verzögerung des Druckanstiegs im Vergleich zu einem erwarteten Druckprofil einschließt.

## Revendications

1. Procédé de surveillance d'un système fluidique (50) d'un système de chromatographie liquide comprenant une pompe de seringue (11s) ayant un piston, une soupape à ports multiples (9r) ayant un orifice (p0) conçu pour, en fonctionnement, administrer à la fois du fluide vers et recevoir du fluide depuis la pompe de seringue (11s), et un récipient (8) ayant un fluide connu dans celui-ci, le procédé comprenant :
(a) l'aspiration du fluide depuis le récipient (8) dans la pompe de seringue (11s) ;
(b) la configuration de la soupape à ports multiples (9r) de manière à accoupler fluidiquement la pompe de seringue (11s) à, dans une première configuration de soupape, un orifice de la soupape à orifices multiples (9r) qui est accouplé à un trajet fluidique ayant un blocage d'écoulement intentionnel dans celui-ci qui empêche un écoulement à travers le système fluidique (50) au-delà du blocage d'écoulement intentionnel, dans lequel le blocage d'écoulement intentionnel est fourni dans une cartouche liée à un test (40b, 40c) qui est disposée à l'intérieur du système fluidique (50) à une position nominale d'une cartouche de palier à deux colonnes (7) et qui est interchangeable avec la cartouche de palier à deux colonnes (7), la cartouche liée à un test (40b, 40c) comprenant une ligne bouchée (6q, 6h) à la position nominale d'une première colonne chromatographique (7b) de la cartouche de palier à deux colonnes (7) ;
(c) le fait d'amener le piston de la pompe de seringue (11s) à se déplacer à une vitesse prédéterminée dans une direction de manière à, si la soupape à orifices multiples (9r) est dans la première configuration de soupape, comprimer progressivement le fluide dans celle-ci tout en mesurant une pression du fluide ou à, si la soupape à orifices multiples (9r) est dans la seconde configuration de soupape, l'expulsion du fluide vers le trajet fluidique tout en mesurant une pression du fluide ;
(d) la détermination d'un profil de la variation de la pression mesurée pendant le temps auquel le piston est amené à se déplacer ;
(e) la comparaison du profil déterminé à un profil attendu qui dépend du fluide ; et
(f) la fourniture d'une notification d'une condition ou un dysfonctionnement de fonctionnement sub-optimal si le profil déterminé varie à partir du profil attendu supérieur à une tolérance prédéterminée.

2. Procédé selon la revendication 1, dans lequel la cartouche liée à un test (40b, 40c) comprend en outre une longueur de tubage vide (41) à la position nominale d'une seconde colonne chromatographique (7a) de la cartouche de palier à deux colonnes (7).

3. Procédé selon la revendication 1 ou la revendication 2, dans lequel l'étape (f) de fourniture d'une notification comprend la fourniture d'une notification qu'une bulle d'air ou de gaz est présente à l'intérieur du système fluidique (50) si le profil de pression déterminé comporte un retard dans une augmentation de pression, par rapport au profil attendu.

4. Procédé de surveillance d'un système fluidique (50) d'un système de chromatographie liquide comprenant une pompe de seringue (11s) ayant un piston, une soupape à ports multiples (9r) ayant un orifice (p0) conçu pour, en fonctionnement, administrer à la fois du fluide vers et recevoir du fluide depuis la pompe de seringue (11s), et un récipient (8) ayant un fluide connu dans celui-ci, le procédé comprenant :
(a) l'aspiration du fluide depuis le récipient (8) dans la pompe de seringue (11s) ;
(b) la configuration de la soupape à ports multiples (9r) de manière à coupler fluidiquement la pompe de seringue (11s) à, dans une première configuration de soupape, un orifice de la soupape à orifices multiples (9r) qui est couplé à un trajet fluidique incluant une longueur de tubage vide (41), dans lequel la longueur de tubage vide (41) est fournie dans une cartouche liée à un test (40) qui est disposée à l'intérieur du système fluidique (50) à la position nominale d'une cartouche porte-colonne (7) et qui est interchangeable avec la cartouche d'appui à deux colonnes (7), ladite longueur de tubage vide (41) étant disposée à la position nominale d'une colonne chromatographique (7a) de la cartouche d'appui à deux colonnes (7);
(c) le fait d'amener le piston de la pompe de seringue (11s) à se déplacer à une vitesse prédéterminée dans une direction de manière à, si la soupape à orifices multiples (9r) est dans la première configuration de soupape, comprimer progressivement le fluide dans celle-ci tout en mesurant une pression du fluide ou à, si la soupape à orifices multiples (9r) est dans la seconde configuration de soupape, l'expulsion du fluide vers le trajet fluidique tout en mesurant une pression du fluide ;
(d) la détermination d'un profil de la variation de la pression mesurée pendant le temps auquel le piston est amené à se déplacer ;
(e) la comparaison du profil déterminé à un profil attendu qui dépend du fluide ; et
(f) fournir une notification d'une condition ou un dysfonctionnement de fonctionnement optimal si le profil déterminé varie à partir du profil attendu supérieur à une tolérance prédéterminée
dans lequel l'étape (f) de fourniture d'une notification comprend la fourniture d'une notification que le trajet de fluide est bloqué si le profil de pression déterminé comporte une augmentation de pression qui dépasse une augmentation attendue de pression supérieure à la tolérance prédéterminée.

5. Procédé selon la revendication 4, dans lequel l'étape (f) de fourniture d'une notification comprend la fourniture d'une notification qu'une bulle d'air ou de gaz est présente à l'intérieur du système fluidique (50) si le profil de pression déterminé comporte un retard dans l'augmentation de pression, par rapport à un profil de pression attendu.
